# EUROPÄISCHE PATENTSCHRIFT

(11) **EP 3 164 252 B1**
(45) Veröffentlichungstag und Bekanntmachung des Hinweises auf die Patenterteilung: **01.09.2021**
(21) Anmeldenummer: 15729380.4
(22) Anmeldetag: 05.06.2015
(51) Int. Cl.: B24B 23/04, B24B 27/08, B24B 47/12, B24B 47/16, B25F 5/00, F16H 21/40, B27B 19/00

(54) **OSZILLATIONSANTRIEBSVORRICHTUNG**
OSCILLATORY DRIVING DEVICE
DISPOSITIF D'ENTRAÎNEMENT EN OSCILLATION

(30) Priorität: 02.07.2014 DE 102014212794
(43) Veröffentlichungstag der Anmeldung: 10.05.2017
(73) Patentinhaber: Robert Bosch GmbH, 70442 Stuttgart (DE)
(72) Erfinder: LUESCHER, Bruno, CH-4800 Zofingen (CH); REUTLINGER, Kurt, 70174 Stuttgart (DE)
(86) Internationale Anmeldenummer: PCT/EP2015/062580
(87) Internationale Veröffentlichungsnummer: WO 2016/000904

(56) Entgegenhaltungen:
- DE-A1-102007 018 466
- DE-C- 354 343
- US-A- 3 505 733

## Beschreibung

### Stand der Technik

Es ist in der US 3,505,733 A bereits eine Oszillationsantriebsvorrichtung für eine Handwerkzeugmaschine, mit zumindest einer Eingangswelle, mit zumindest einer Ausgangswelle und mit zumindest einer die Eingangswelle mit der Ausgangswelle wirkungsmäßig verbindenden Getriebeeinheit, die zumindest ein Exzenterelement zu einem oszillierenden Antrieb der Ausgangswelle umfasst, wobei die Getriebeeinheit zumindest ein weiteres Exzenterelement zu einem oszillierenden Antrieb der Ausgangswelle umfasst, vorgeschlagen worden. Auch aus der DE 354 343 C ist eine Oszillationsantriebsvorrichtung mit zwei Exzenterelementen bekannt.

### Offenbarung der Erfindung

Die Erfindung geht aus von einer Oszillationsantriebsvorrichtung für eine Handwerkzeugmaschine, mit zumindest einer Eingangswelle, mit zumindest einer Ausgangswelle und mit zumindest einer die Eingangswelle mit der Ausgangswelle wirkungsmäßig verbindenden Getriebeeinheit, die zumindest ein Exzenterelement zu einem oszillierenden Antrieb der Ausgangswelle umfasst, wobei die Getriebeeinheit zumindest ein weiteres Exzenterelement zu einem oszillierenden Antrieb der Ausgangswelle umfasst.

Es wird vorgeschlagen, dass die Exzenterelemente auf gegenüberliegenden Seiten einer gedachten Ebene angeordnet sind, in welcher eine Drehachse der Ausgangswelle liegt und die mit einer Drehachse der Eingangswelle einen kleinsten Winkel von zumindest 70° einschließt, wobei ein erstes der Exzenterelemente auf der Eingangswelle entlang der Drehachse der Eingangswelle vor und ein zweites der Exzenterelemente auf der Eingangswelle entlang der Drehachse der Eingangswelle hinter einem Schnittpunkt der Drehachsen der Eingangswelle und der Ausgangswelle angeordnet ist. Die zumindest zwei Exzenterelemente der Getriebeeinheit sind jeweils zu einem oszillierenden Antrieb der Ausgangswelle vorgesehen. Unter einer "Oszillationsantriebsvorrichtung" soll in diesem Zusammenhang insbesondere eine Vorrichtung verstanden werden, die dazu vorgesehen ist, infolge einer Antriebskraft und/oder eines Antriebsmoments eine hin- und hergehende Bewegung eines Elements, insbesondere der Ausgangswelle der Vorrichtung, um eine Achse in einem definierten Winkelbereich zu erzeugen. Bevorzugt wird zumindest ein Antriebselement, insbesondere die Eingangswelle der Oszillationsan- triebsvorrichtung, rotatorisch mittels einer Antriebseinheit der Handwerkzeugmaschine angetrieben. Die Antriebseinheit ist vorzugsweise als ein Elektromotor ausgebildet. Es ist jedoch auch denkbar, dass die Antriebseinheit als Fluidantriebseinheit, als Verbrennungsantriebseinheit, als Hybridantriebseinheit usw. ausgebildet ist. Ferner soll in diesem Zusammenhang unter einer "Handwerkzeugmaschine" insbesondere eine werkstückbearbeitende Maschine, vorteilhaft jedoch eine Bohrmaschine, ein Bohr- und/oder Schlaghammer, eine Säge, ein Hobel, ein Schrauber, eine Fräse, ein Schleifer, ein Winkelschleifer, ein Gartengerät und/oder ein Multifunktionswerkzeug verstanden werden. Des Weiteren soll in diesem Zusammenhang unter einem "Exzenterelement" ein Element verstanden werden, das dazu vorgesehen ist, um eine Drehachse gedreht an einer der Drehachse abgewandten Außenfläche eine Kraft auf ein drittes Element zu bewirken, wobei ein Abstand zwischen der Drehachse und der Au-ßenfläche entlang einer Umfangsrichtung ungleichförmig ist. Vorzugsweise soll darunter insbesondere ein scheibenförmiges Bauteil verstanden werden, dessen Mittelpunkt und vorzugsweise auch dessen Schwerpunkt von einer Drehachse des Bauteils beabstandet angeordnet ist. Unter einem "scheibenförmigen Bauteil" soll insbesondere ein Bauteil verstanden werden, dessen Materialerstreckung in Radialrichtung zumindest 10% von einem Durchmesser des Bauteils beträgt, wobei eine Axialerstreckung des Bauteils vorzugsweise weniger als 10% des Durchmessers beträgt. Darunter, dass ein Exzenterelement "zu einem oszillierenden Antrieb der Ausgangswelle" vorgesehen ist, soll in diesem Zusammenhang insbesondere verstanden werden, dass eine Kraft, welche von dem Exzenterelement direkt auf ein weiteres Element wirkt, zumindest annähernd direkt, zu einem Antrieb der Ausgangswelle genutzt wird. Vorzugsweise soll darunter insbesondere verstanden werden, dass die Kraft, welche das Exzenterelement an einer der Drehachse abgewandten Außenfläche direkt auf ein weiteres Element wirkt, zumindest annähernd frei von Verlusten auf die Ausgangswelle übertragen wird. Dabei soll unter "zumindest annähernd frei von Verlusten" insbesondere verstanden werden, dass zumindest 60 %, vorzugsweise zumindest 75% und besonders bevorzugt zumindest 90% der Kraft auf die Ausgangswelle übertragen wird. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung der Oszillationsantriebsvorrichtung kann ein zuverlässiger oszillierender Antrieb der Ausgangswelle erreicht werden. Vorzugsweise kann dadurch eine Kraftübertragung auf zumindest zwei Exzenterelemente verteilt werden. Dadurch kann wiederum eine Belastung von Bauteilen gering gehalten werden. Ferner können Verwindungen vermieden werden, wodurch eine Geräuschentwicklung gering gehalten werden kann. Insbesondere kann erreicht werden, dass über jeden der Exzenter zumindest nur 50% einer Kraft übertragen werden.

Ferner wird vorgeschlagen, dass das weitere Exzenterelement der Getriebeeinheit gegenüber dem Exzenterelement einen Winkelversatz aufweist. Vorzugsweise weist das weitere Exzenterelement der Getriebeeinheit gegenüber dem Exzenterelement einen Winkelversatz um eine Drehachse der Eingangswelle auf. Bevorzugt beträgt der Winkelversatz zumindest annähernd 180°. Unter einem "Winkelversatz" soll in diesem Zusammenhang insbesondere ein Versatz einer Maximalauslenkung, also dem Punkt eines maximalen Radius zwischen einer Drehachse und einer der Drehachse abgewandten Außenfläche, des weiteren Exzenterelements gegenüber einer Maximalauslenkung des Exzenterelements, um eine Drehachse betrachtet, verstanden werden. Ferner soll in diesem Zusammenhang unter "zumindest annähernd" insbesondere verstanden werden, dass eine Abweichung von einem vorgegebenen Wert maximal 20% vorzugsweise maximal 10% und besonders bevorzugt maximal 5% des vorgegebenen Werts beträgt. Dadurch kann insbesondere eine Kraftübertragung aus zwei gegenüberliegenden Richtungen durch zumindest zwei Exzenterelemente erreicht werden. Insbesondere kann so eine annähernd gleichmäßig verteilte Kraftübertragung erreicht werden, wodurch wiederum eine Belastung von Bauteilen vorteilhaft gering gehalten werden kann.

Des Weiteren wird vorgeschlagen, dass die Exzenterelemente der Getriebeeinheit auf der Eingangswelle entlang einer Drehachse der Eingangswelle zueinander beabstandet angeordnet sind. Vorzugsweise sind die Exzenterelemente der Getriebeeinheit wesentlich zueinander beabstandet. Dabei soll unter "wesentlich zueinander beabstandet" insbesondere verstanden werden, dass ein Abstand zwischen den Exzenterelementen, insbesondere entlang einer Drehachse der Eingangswelle betrachtet, zumindest 1 cm, vorzugsweise zumindest 2 cm und besonders bevorzugt zumindest 3 cm beträgt. Dadurch kann insbesondere erreicht werden, dass eine Kraftübertragung durch die Exzenterelemente von verschiedenen, zueinander beabstandeten Punkten ausgeht. Dadurch kann insbesondere eine vorteilhaft gleichmäßige und verteilte Kraftübertragung erreicht werden.

Die Exzenterelemente sind auf gegenüberliegenden Seiten einer gedachten Ebene angeordnet, in welcher die Drehachse der Ausgangswelle liegt und die sich vorzugsweise zumindest annähernd senkrecht zu der Drehachse der Eingangswelle erstreckt. Dadurch kann insbesondere eine Kraftübertragung auf die Ausgangswelle aus zwei gegenüberliegenden Richtungen realisiert werden. Insbesondere kann dadurch erreicht werden, dass eine Kraft vorzugsweise symmetrisch auf die Ausgangswelle übertragen wird.

Liegt kein direkter Schnittpunkt zwischen den Drehachsen der Eingangswelle und der Ausgangswelle vor, soll unter einem Schnittpunkt der Drehachsen der Eingangswelle und der Ausgangswelle insbesondere ein Punkt auf der Drehachse der Eingangswelle verstanden werden, an welchem ein Abstand zu der Drehachse der Ausgangswelle minimal ist. Darunter, dass ein Exzenterelement "vor bzw. hinter einem Schnittpunkt angeordnet" ist, soll in diesem Zusammenhang verstanden werden, dass das erste der Exzenterelemente, aus Richtung einer Antriebseinheit und entlang der Drehachse der Eingangswelle betrachtet, vor bzw. hinter dem Schnittpunkt angeordnet ist. Vorzugsweise soll darunter insbesondere verstanden werden, dass das erste der Exzenterelemente, entlang eines Kraftflusses während eines Betriebs und entlang der Drehachse der Eingangswelle betrachtet, vor bzw. hinter dem Schnittpunkt angeordnet ist. Dadurch kann insbesondere eine besonders vorteilhafte Kraftübertragung auf die Ausgangswelle aus zwei gegenüberliegenden Richtungen realisiert werden. Insbesondere kann dadurch erreicht werden, dass eine Kraft vorzugsweise zumindest annähernd symmetrisch auf die Ausgangswelle übertragen wird.

Ferner wird vorgeschlagen, dass die Getriebeeinheit zumindest einen Bewegungswandler aufweist, über welchen die Exzenterelemente wirkungsmäßig mit der Ausgangswelle verbunden sind. Unter einem "Bewegungswandler" soll in diesem Zusammenhang insbesondere eine Einheit verstanden werden, die dazu vorgesehen ist eine von zumindest einem Element durchgeführte Bewegung zumindest teilweise abzunehmen und in eine differierende Bewegung umzuwandeln. Vorzugsweise wird die umgewandelte Bewegung auf ein weiteres Element übertragen. Bevorzugt wird die Bewegung in eine differierende Bewegungsart umgewandelt. Besonders bevorzugt soll darunter insbesondere eine Einheit verstanden werden, die dazu vorgesehen ist eine von zumindest einem Element durchgeführte Rotationsbewegung zumindest teilweise abzunehmen und in eine Oszillationsbewegung umzuwandeln. Es sind verschiedene, einem Fachmann als sinnvoll erscheinende Bewegungsarten denkbar, wie beispielsweise eine Rotationsbewegung, eine Translationsbewegung, eine Oszillationsbewegung o. dgl. Dadurch kann insbesondere eine vorteilhafte wirkungsmäßige Verbindung erreicht werden. Vorzugsweise kann dadurch eine zuverlässige Kraftübertragung erreicht werden. Ferner kann dadurch zuverlässig eine Bewegung der Exzenterelemente in eine Oszillationsbewegung umgewandelt werden.

Des Weiteren wird vorgeschlagen, dass der zumindest eine Bewegungswandler zumindest ein erstes Verbindungselement aufweist, das an dem ersten Exzenterelement anliegt, und zumindest ein zweites Verbindungselement aufweist, das an dem zweiten Exzenterelement anliegt. Vorzugsweise ist/sind das erste Verbindungselement und/oder das zweite Verbindungselement als Arm ausgebildet. Grundsätzlich wäre jedoch auch eine andere, einem Fachmann als sinnvoll erscheinende Ausgestaltung des Verbindungselements denkbar. Unter einem "Verbindungselement" soll in diesem Zusammenhang insbesondere ein Element verstanden werden, das dazu vorgesehen ist, zumindest einen Teil einer Bewegung insbesondere an einem der Exzenterelemente direkt abzunehmen. Vorzugsweise soll darunter insbesondere ein Element verstanden werden, das dazu vorgesehen ist, eine Teilbewegung an einem der Exzenterelemente direkt abzunehmen. Besonders bevorzugt soll darunter insbesondere ein Element verstanden werden, das dazu vorgesehen ist, eine Teilbewegung an einem der Exzenterelemente direkt abzunehmen und an die Ausgangswelle zu übertragen. Dadurch kann vorzugsweise besonders zuverlässig eine Bewegung an den Exzenterelementen abgenommen werden. Ferner kann dadurch insbesondere eine Kraft auf zwei Verbindungselemente verteilt werden, wodurch eine Belastung der Verbindungselemente gering gehalten werden kann.

Es wird ferner vorgeschlagen, dass die Ausgangswelle auf einer der Eingangswelle zugewandten Seite fliegend gelagert ist. Vorzugsweise ist die Ausgangswelle an einem Ende fliegend gelagert, an welchem der Bewegungswandler form- und/oder kraftschlüssig mit der Ausgangswelle verbunden ist. Unter "fliegend gelagert" soll in diesem Zusammenhang insbesondere verstanden werden, dass zumindest ein Lastangriff an der Ausgangswelle außerhalb einer Strecke zwischen zwei äußersten Lagerpunkten erfolgt. Vorzugsweise soll darunter insbesondere verstanden werden, dass zumindest ein Lastangriff an der Ausgangswelle an einem frei auskragenden Ende der Ausgangswelle erfolgt. Bevorzugt erfolgt ein Lastangriff des Bewegungswandlers an dem frei auskragenden Ende der Ausgangswelle. Dadurch kann vorteilhaft ein Bauraumbedarf, insbesondere im Bereich der Eingangswelle und der Ausgangswelle, gering gehalten werden. Insbesondere bei einer symmetrischen Kraftübertragung des Bewegungswandlers auf die Ausgangswelle, kann eine Belastung an dem fliegend gelagerten Ende der Ausgangswelle gering gehalten werden.

Es wird weiter vorgeschlagen, dass die Ausgangswelle zumindest eine Ausnehmung aufweist, durch welche sich die Eingangswelle erstreckt. Vorzugsweise weist die Ausgangswelle dazu, zumindest in einem Bereich der Ausnehmung, einen Durchmesser auf, der größer ist, als ein Durchmesser der Eingangswelle. Besonders bevorzugt weist die Ausnehmung einen Durchmesser auf, der größer ist als ein Durchmesser der Eingangswelle. So kann insbesondere eine Berührung zwischen der Eingangswelle und der Ausgangswelle auch bei einer oszillierenden Bewegung der Ausgangswelle vermieden werden. Die Ausnehmung ist vorzugsweise von einer durchgehenden Ausnehmung gebildet. Vorzugsweise ist die Ausnehmung in zumindest einer Ebene allseitig von einem Material der Ausgangswelle begrenzt. Grundsätzlich wäre jedoch auch denkbar, dass die Ausnehmung entlang einer Mittelachse in einem Winkelbereich von maximal 180°, vorzugsweise von maximal 240° und besonders bevorzugt von maximal 300° von einem Material der Ausgangswelle begrenzt ist. Dabei wäre insbesondere denkbar, dass die Ausnehmung, in einer Schnittebene parallel zu der Drehachse betrachtet, C-förmig von einem Material der Ausgangswelle begrenzt ist, also in vorzugsweise drei sich senkrecht zueinander erstreckende Richtungen geöffnet ist. Dadurch kann insbesondere eine Kollision zwischen der Eingangswelle und der Ausgangswelle vermieden werden. Ferner kann so ermöglicht werden, dass die Ausgangswelle oberhalb der Eingangswelle, insbesondere also auf einer dem Bewegungswandler abgewandten Seite, gelagert werden kann. Hierdurch kann eine Lagerung der Ausgangswelle insbesondere in einem Bereich erfolgen, in dem Bauraum vorhanden ist und insbesondere kein Platzmangel vorliegt. Ferner kann dadurch insbesondere ein großer Abstand zwischen zwei äußersten Lagerpunkten erreicht werden.

Grundsätzlich wäre jedoch auch denkbar, dass die Ausgangswelle zumindest teilweise an der Eingangswelle vorbeigeführt ist.

Ferner wird vorgeschlagen, dass die Oszillationsantriebsvorrichtung zumindest ein Lagerelement zur Lagerung der Ausgangswelle aufweist, welches zwischen einem Verbindungsbereich, von der Ausgangswelle und dem Bewegungswandler, und der Eingangswelle angeordnet ist. Vorzugsweise ist das Lagerelement an einem der Eingangswelle zugewandten Ende der Ausgangswelle angeordnet. Bevorzugt ist das Lagerelement an einem Ende der Ausgangswelle angeordnet, an welchem ein Lastangriff des Bewegungswandlers erfolgt. Unter einem "Lagerelement" soll in diesem Zusammenhang insbesondere ein Maschinenelement verstanden werden, das zu einem Führen gegeneinander beweglicher Bauteile vorgesehen ist. Es sind verschiedene, einem Fachmann als sinnvoll erscheinende Lagerelemente denkbar, insbesondere soll darunter jedoch ein Gleitlager oder besonders bevorzugt ein Wälzlager verstanden werden. Dadurch kann vorteilhaft eine zuverlässige Lagerung der Ausgangswelle bei geringem Bauraumbedarf erreicht werden. Ferner kann dadurch insbesondere eine konstruktiv einfache Lagerung und/oder eine konstruktiv einfache Ausgestaltung der Ausgangswelle erreicht werden.

Des Weiteren wird vorgeschlagen, dass die Ausgangswelle aus zumindest zwei Teilwellen besteht, welche zueinander beabstandet angeordnet sind und sich die Eingangswelle durch eine Lücke zwischen der ersten Teilwelle und der zweiten Teilwelle erstreckt. Vorzugsweise sind die Teilwellen der Ausgangswelle zu einer Kraftübertragung über den Bewegungswandler verbunden. Bevorzugt sind die Teilwellen jeweils über den Bewegungswandler wirkmäßig mit der Eingangswelle verbunden. Besonders bevorzugt weisen die Teilwellen eine identische Drehachse auf. Dadurch kann insbesondere eine Kollision zwischen der Eingangswelle und der Ausgangswelle vermieden werden. Ferner kann so ermöglicht werden, dass die Ausgangswelle auf zwei gegenüberliegenden Seiten der Eingangswelle gelagert werden kann. Hierdurch kann eine Lagerung der Ausgangswelle insbesondere in einem Bereich erfolgen, in dem Bauraum vorhanden ist und insbesondere kein Platzmangel vorliegt. Vorzugsweise kann dadurch insbesondere ein großer Abstand zwischen zwei äußersten Lagerpunkten erreicht werden.

Es wird ferner vorgeschlagen, dass die Oszillationsantriebsvorrichtung zumindest ein erstes Federelement aufweist, das dazu vorgesehen ist, das erste Verbindungselement des Bewegungswandlers, zu einer ständigen Kontaktierung des ersten Verbindungselements mit einer Außenfläche des ersten Exzenterelements, in Richtung des ersten Exzenterelements zu ziehen und/oder zu drücken. Zudem oder alternativ weist die Oszillationsantriebsvorrichtung zumindest ein zweites Federelement auf, das dazu vorgesehen ist, das zweite Verbindungselement des Bewegungswandlers, zu einer ständigen Kontaktierung des zweiten Verbindungselements mit einer Außenfläche des zweiten Exzenterelements, in Richtung des zweiten Exzenterelements zu ziehen und/oder zu drücken. Unter einem "Federelement" soll insbesondere ein makroskopisches Element verstanden werden, das zumindest eine Erstreckung aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Es sind verschiedene, einem Fachmann als sinnvoll erscheinende Federelemente denkbar, insbesondere soll darunter jedoch eine Schraubenfeder verstanden werden. Dadurch kann insbesondere eine konstruktiv einfache Ausgestaltung der Verbindungselemente erreicht werden. Ferner kann dadurch zuverlässig eine Kontaktierung der Verbindungselemente mit den Exzenterelementen erreicht werden.

Es wird weiter vorgeschlagen, dass die Oszillationsantriebsvorrichtung eine Vibrationsausgleichseinheit aufweist, die wenigstens eine Ausgleichsmasse aufweist, die zum Ausgleich einer Vibration in wenigstens einem Betriebszustand entgegen einer Bewegungsrichtung der Ausgangswelle angetrieben ist. Die Ausgleichsmasse ist dabei insbesondere nicht zu einem Antrieb der Ausgangswelle vorgesehen. Reib- und/oder Lagerkräfte zwischen der Ausgleichsmasse und der Ausgangswelle sollen dabei insbesondere nicht als Antriebskräfte verstanden werden. Unter einer "Ausgleichsmasse" soll ein Bauteil verstanden werden, welches dazu vorgesehen ist, Vibrationen in einem Betriebszustand zumindest teilweise, vorzugsweise vollständig zu kompensieren. Unter "Vibrationen" sollen insbesondere unerwünschte Bewegungen der Oszillationsantriebsvorrichtung und insbesondere einer gesamten Handwerkzeugmaschine verstanden werden, welche insbesondere durch Trägheitsmomente bedingt sind, welche von einer oszillierenden Bewegung hervorgerufen werden. Durch die Ausgleichsmasse können Vibrationen in einem Betriebszustand der Oszillationsantriebsvorrichtung insbesondere reduziert, vorzugsweise auf Null reduziert werden. Dadurch kann ein Bedienkomfort einer Handwerkzeugmaschine für einen Benutzer vorteilhaft erhöht werden. Zudem können Geräusche, welche durch unerwünschte Vibrationen in einem Betriebszustand der Oszillationsantriebsvorrichtung entstehen, vorteilhaft reduziert werden, wodurch der Bedienkomfort für den Benutzer besonders vorteilhaft erhöht werden kann. Zudem kann durch die Reduktion der Vibrationen, insbesondere die Reduktion der Vibrationen auf Null, in einem Betriebszustand der Oszillationsantriebsvorrichtung ein vorteilhaft präzises Bearbeitungsergebnis erreicht werden.

Zudem wird vorgeschlagen, dass die Getriebeeinheit zumindest ein weiteres Exzenterelement zu einem oszillierenden Antrieb der Ausgleichsmasse umfasst. Vorzugsweise ist das zumindest eine weitere Exzenterelement, das zu einem oszillierenden Antrieb der Ausgleichsmasse vorgesehen ist, von den Exzenterelementen, welche zu einem oszillierenden Antrieb der Ausgangswelle vorgesehen sind, getrennt ausgebildet. Alternativ kann das zumindest eine weitere Exzenterelement, das zu einem oszillierenden Antrieb der Ausgleichsmasse vorgesehen ist, auch einstückig mit zumindest einem der Exzenterelemente ausgebildet sein, welche zu einem oszillierenden Antrieb der Ausgangswelle vorgesehen sind. Vorzugsweise ist das zumindest eine weitere Exzenterelement, das zu einem oszillierenden Antrieb der Ausgleichsmasse vorgesehen ist, einteilig mit dem ersten der Exzenterelemente ausgebildet, welche zu einem oszillierenden Antrieb der Ausgangswelle vorgesehen ist. Besonders bevorzugt bildet das weitere Exzenterelement mit dem Exzenterelement einen elliptischen Exzenter. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Dadurch kann insbesondere ein vorteilhafter Antrieb der Ausgleichsmasse erreicht werden.

Ferner wird vorgeschlagen, dass das weitere Exzenterelement, das zu einem oszillierenden Antrieb der Ausgleichsmasse vorgesehen ist, einen maximalen Rotationsradius aufweist, der größer ist, als ein maximaler Rotationsradius der Exzenterelemente, die zu einem oszillierenden Antrieb der Ausgangswelle vorgesehen sind. Unter einem "maximalen Rotationsradius" soll in diesem Zusammenhang insbesondere eine maximale Erstreckung, in radialer Richtung zu einer Drehachse betrachtet ,von einer Drehachse zu einer der Drehachse abgewandten Außenfläche verstanden werden. Dadurch kann insbesondere eine differierende Auslenkung der Exzenterelemente erreicht werden. Dadurch kann erreicht werden, dass sich die Ausgleichsmasse schneller bewegt als die Ausgangswelle. Da die Ausgleichsmasse einen Drehimpuls der Ausgangswelle kompensieren soll, kann dadurch in diesem Fall eine Ausgleichsmasse mit einem geringen Massenträgheitsmoment verwendet werden. Das geringe Massenträgheitsmoment kann durch die erhöhte Geschwindigkeit der Ausgleichsmasse kompensiert werden. Dadurch kann ein Gewicht der Ausgleichsmasse und damit auch der Oszillationsantriebsvorrichtung gering gehalten werden.

Des Weiteren wird vorgeschlagen, dass die Getriebeeinheit zumindest einen weiteren Bewegungswandler aufweist, der das Exzenterelement, das zu einem oszillierenden Antrieb der Ausgleichsmasse vorgesehen ist, wirkungsmäßig mit der Ausgleichsmasse verbindet. Vorzugsweise weist der Bewegungswandler zumindest ein Verbindungselement auf, welches an dem Exzenterelement, das zu einem oszillierenden Antrieb der Ausgleichsmasse vorgesehen ist, anliegt. Dadurch kann vorzugsweise Bewegung von dem Exzenterelement auf die Ausgleichsmasse übertragen werden. Insbesondere kann dadurch besonders zuverlässig eine Bewegung an dem Exzenterelement abgenommen werden.

Es wird ferner vorgeschlagen, dass die Oszillationsantriebsvorrichtung zumindest ein Federelement aufweist, das zwischen dem Verbindungselement des weiteren Bewegungswandlers und dem ersten Verbindungselement des Bewegungswandlers angeordnet ist. Vorzugsweise ist das zumindest eine Federelement dazu vorgesehen, eine ständige Kontaktierung des Verbindungselements des weiteren Bewegungswandlers mit dem weiteren Exzenterelement, das zu einem oszillierenden Antrieb der Ausgleichsmasse vorgesehen ist, zu gewährleisten. Besonders bevorzugt ist das zumindest eine Federelement zudem dazu vorgesehen, eine ständige Kontaktierung des ersten Verbindungselement des Bewegungswandlers mit dem Exzenterelement, das zu einem oszillierenden Antrieb der Ausgangswelle vorgesehen ist, zu gewährleisten. Dadurch kann insbesondere eine konstruktiv einfache Ausgestaltung der Verbindungselemente erreicht werden. Ferner kann dadurch zuverlässig eine Kontaktierung der Verbindungselemente mit den Exzenterelementen erreicht werden.

Die erfindungsgemäße Oszillationsantriebsvorrichtung soll hierbei nicht auf die oben beschriebene Anwendung und Ausführungsform beschränkt sein. Insbesondere kann die erfindungsgemäße Oszillationsantriebsvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind sieben Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Handwerkzeugmaschine mit einer erfindungsgemäßen Oszillationsantriebsvorrichtung und mit einer Antriebseinheit in einer schematischen, perspektivischen Seitenansicht,
- Fig. 2: einen Teilbereich der Handwerkzeugmaschine mit der erfindungsgemäßen Oszillationsantriebsvorrichtung und einem Teil der Antriebseinheit in einer schematischen Seitenansicht,
- Fig. 3: einen Teilbereich der Handwerkzeugmaschine mit der erfindungsgemäßen Oszillationsantriebsvorrichtung und einem Teil der Antriebseinheit in einer schematischen Draufsicht,
- Fig. 4: einen Teilbereich einer Handwerkzeugmaschine mit einer alternativen erfindungsgemäßen Oszillationsantriebsvorrichtung und einem Teil einer Antriebseinheit in einer schematischen Seitenansicht,
- Fig. 5: einen Teilbereich einer Handwerkzeugmaschine mit einer weiteren alternativen erfindungsgemäßen Oszillationsantriebsvorrichtung und einem Teil einer Antriebseinheit in einer schematischen Seitenansicht,
- Fig. 6: einen Teilbereich einer Handwerkzeugmaschine mit einer weiteren alternativen erfindungsgemäßen Oszillationsantriebsvorrichtung und einem Teil einer Antriebseinheit in einer schematischen Seitenansicht,
- Fig. 7: einen Teilbereich einer Handwerkzeugmaschine mit einer weiteren alternativen erfindungsgemäßen Oszillationsantriebsvorrichtung und einem Teil einer Antriebseinheit in einer schematischen Seitenansicht,
- Fig. 8: einen Teilbereich einer Handwerkzeugmaschine mit einer weiteren alternativen erfindungsgemäßen Oszillationsantriebsvorrichtung und einem Teil einer Antriebseinheit in einer schematischen Draufsicht,
- Fig. 9: einen Teilbereich der weiteren alternativen erfindungsgemäßen Oszillationsantriebsvorrichtung in einer schematischen Schnittdarstellung entlang der Schnittlinie IX,
- Fig. 10: einen Teilbereich einer Handwerkzeugmaschine mit einer weiteren alternativen erfindungsgemäßen Oszillationsantriebsvorrichtung und einem Teil einer Antriebseinheit in einer schematischen Draufsicht und
- Fig. 11: einen Teilbereich der weiteren alternativen erfindungsgemäßen Oszillationsantriebsvorrichtung in einer schematischen Schnittdarstellung entlang der Schnittlinie XI.

### Beschreibung der Ausführungsbeispiele

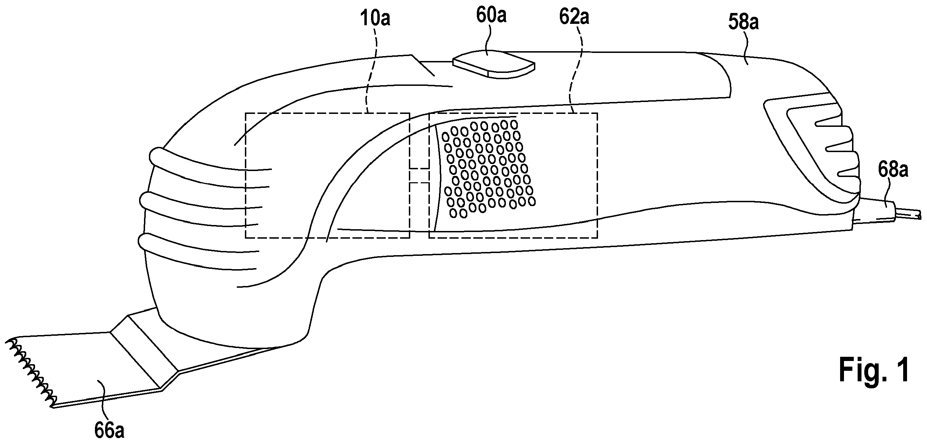

Figur 1 zeigt eine oszillierend antreibbare Handwerkzeugmaschine 12a. Die Handwerkzeugmaschine 12a ist von einem oszillierend anteibbaren Multifunktionswerkzeug gebildet. Die Handwerkzeugmaschine 12a weist ein als Handgriff dienendes Gehäuse 58a sowie einen in dem Gehäuse 58a integrierten Schalter 60a zum Ein- bzw. Ausschalten der Handwerkzeugmaschine 12a auf. Zudem umfasst die Handwerkzeugmaschine 12a eine nicht näher dargestellte, von einem Elektromotor gebildete Antriebseinheit 62a. Die Antriebseinheit 62a wird über den Schalter 60a der Handwerkzeugmaschine 12a gestartet. Der Schalter 60a ist direkt an der Antriebseinheit 62a angeordnet. Ferner weist die Handwerkzeugmaschine 12a eine Oszillationsantriebsvorrichtung 10a auf. Die Antriebseinheit 62a und die Oszillationsantriebsvorrichtung 10a sind jeweils in dem Gehäuse 58a der Handwerkzeugmaschine 12a angeordnet. Ferner weist die Handwerkzeugmaschine 12a eine oszillierend antreibbare Spindel 56a auf. Die Spindel 56a umfasst eine Ausgangswelle 16a der Oszillationsantriebsvorrichtung 10a und eine Werkzeugaufnahme 64a. Die Ausgangswelle 16a und die Werkzeugaufnahme 64a sind fest miteinander verbunden. Grundsätzlich wäre jedoch auch eine andere, einem Fachmann als sinnvoll erscheinende Ausgestaltung denkbar. Die Werkzeugaufnahme 64a ist in einem vorderen Bereich der Handwerkzeugmaschine 12a angeordnet. Die Werkzeugaufnahme 64a ist zu einer Aufnahme eines Einsatzwerkzeugs 66a vorgesehen. In einem der Werkzeugaufnahme 64a abgewandten Bereich der Handwerkzeugmaschine 12a weist die Handwerkzeugmaschine 12a ein Stromkabel 68a zur Energieversorgung der Antriebseinheit 62a auf. Grundsätzlich wäre jedoch auch denkbar, dass die Antriebseinheit 62a über einen Akkumulator mit Energie versorgt wird.

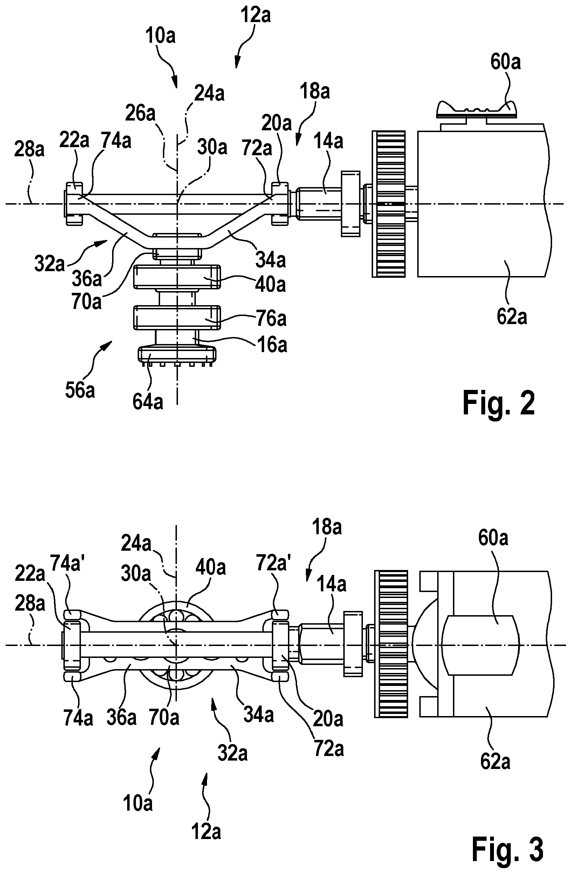

Die Oszillationsantriebsvorrichtung 10a weist eine Eingangswelle 14a und die Ausgangswelle 16a auf. Die Eingangswelle 14a ist direkt mit der Antriebseinheit 62a verbunden. Die Eingangswelle 14a wird in einem Betrieb der Handwerkzeugmaschine 12a durch die Antriebseinheit 62a angetrieben. Ferner weist die Oszillationsantriebsvorrichtung 10a eine Getriebeeinheit 18a auf. Die Getriebeeinheit 18a verbindet die Eingangswelle 14a und die Ausgangswelle 16a wirkungsmäßig. Die Getriebeeinheit 18a umfasst ein erstes Exzenterelement 20a zu einem oszillierenden Antrieb der Ausgangswelle 16a. Ferner umfasst die Getriebeeinheit 18a ein zweites Exzenterelement 22a zu einem oszillierenden Antrieb der Ausgangswelle 16a. Das erste Exzenterelement 20a und das zweite Exzenterelement 22a sind jeweils zu einem oszillierenden Antrieb der Ausgangswelle 16a vorgesehen. Das erste Exzenterelement 20a und das zweite Exzenterelement 22a sind jeweils als Exzenterscheibe ausgebildet. Ferner sind das erste Exzenterelement 20a und das zweite Exzenterelement 22a jeweils auf der Eingangswelle 14a angeordnet. Die Exzenterelemente 20a, 22a sind jeweils an verschiedenen Positionen auf der Eingangswelle 14a aufgepresst. Grundsätzlich wäre jedoch auch eine andere, einem Fachmann als sinnvoll erscheinende Form der Befestigung der Exzenterelemente 20a, 22a an der Eingangswelle 14a denkbar. Das zweite Exzenterelement 22a der Getriebeeinheit 18a weist gegenüber dem ersten Exzenterelement 20a einen Winkelversatz auf. Das zweite Exzenterelement 22a weist gegenüber dem ersten Exzenterelement 20a einen Winkelversatz um eine Drehachse 28a der Eingangswelle 14a auf. Der Winkelversatz beträgt 180°. Ferner sind die Exzenterelemente 20a, 22a der Getriebeeinheit 18a auf der Eingangswelle 14a entlang der Drehachse 28a der Eingangswelle 14a zueinander beabstandet angeordnet. Die Exzenterelemente 20a, 22a sind auf der Eingangswelle 14a wesentlich zueinander beabstandet (Figur 2).

Die Exzenterelemente 20a, 22a der Getriebeeinheit 18a sind auf gegenüberliegenden Seiten einer gedachten Ebene 24a angeordnet, in welcher eine Drehachse 26a der Ausgangswelle 16a liegt und die mit der Drehachse 28a der Eingangswelle 14a einen kleinsten Winkel von zumindest 70° einschließt. Die Drehachse 28a der Eingangswelle 14a steht senkrecht auf der gedachten Ebene 24a. Die Exzenterelemente 20a, 22a weisen jeweils einen identischen Abstand zu der gedachten Ebene 24a auf. Das erste Exzenterelement 20a ist aus Richtung der Antriebseinheit 62a betrachtet vor der gedachten Ebene 24a angeordnet. Das zweite Exzenterelement 22a ist aus Richtung der Antriebseinheit 62a betrachtet hinter der gedachten Ebene angeordnet. Das erste Exzenterelement 20a ist auf der Eingangswelle 14a entlang der Drehachse 28a der Eingangswelle 14a vor einem Schnittpunkt 30a der Drehachsen 26a, 28a der Eingangswelle 14a und der Ausgangswelle 16a angeordnet. Das zweite Exzenterelement 22a ist auf der Eingangswelle 14a entlang der Drehachse 28a der Eingangswelle 14a hinter dem Schnittpunkt 30a der Drehachsen 26a, 28a der Eingangswelle 14a und der Ausgangswelle 16a angeordnet. Der Schnittpunkt 30a liegt in der gedachten Ebene 24a. Ferner weisen die Exzenterelemente 20a, 22a jeweils einen identischen Abstand zu dem Schnittpunkt 30a der Drehachsen 26a, 28a der Eingangswelle 14a und der Ausgangswelle 16a auf (Figur 2).

Ferner weist die Getriebeeinheit 18a einen Bewegungswandler 32a auf. Über den Bewegungswandler 32a sind die Exzenterelemente 20a, 22a wirkungsmäßig mit der Ausgangswelle 16a verbunden. Der Bewegungswandler 32a ist dazu vorgesehen, die Bewegung der Exzenterelemente 20a, 22a in eine Oszillationsbewegung umzuwandeln und diese auf die Ausgangswelle 16a zu übertragen. Der Bewegungswandler 32a weist ein erstes Verbindungselement 34a und ein zweites Verbindungselement 36a auf. Die Verbindungselemente 34a, 36a sind jeweils als Arm ausgebildet. Ferner weist der Bewegungswandler 32a einen Befestigungsring 70a auf. Die Verbindungselemente 34a, 36a sind jeweils einstückig mit dem Befestigungsring 70a verbunden. Die Verbindungselemente 34a, 36a ragen jeweils auf gegenüberliegenden Seiten aus dem Befestigungsring 70a. Das erste Verbindungselement 34a liegt an dem ersten Exzenterelement 20a an. Das erste Verbindungselement 34a weist zu einem sicheren Anliegen an dem ersten Exzenterelement 20a, auf einer dem Befestigungsring 70a abgewandten Seite, zwei Fortsätze 72a, 72a' auf. Die Fortsätze 72a, 72a' sind, parallel zu der Drehachse 28a der Eingangswelle 14a betrachtet, in einer Ebene senkrecht zu der Drehachse 26a der Ausgangswelle 16a auf gegenüberliegenden Seiten des ersten Exzenterelements 20a angeordnet. Die Fortsätze 72a, 72a' umgreifen das Exzenterelement 20a teilweise. Das zweite Verbindungselement 36a liegt an dem zweiten Exzenterelement 22a an. Das zweite Verbindungselement 36a weist zu einem sicheren Anliegen an dem zweiten Exzenterelement 22a, auf einer dem Befestigungsring 70a abgewandten Seite, zwei Fortsätze 74a, 74a' auf. Die Fortsätze 74a, 74a' sind, parallel zu der Drehachse 28a der Eingangswelle 14a betrachtet, in einer Ebene senkrecht zu der Drehachse 26a der Ausgangswelle 16a auf gegenüberliegenden Seiten des zweiten Exzenterelements 22a angeordnet. Die Fortsätze 74a, 74a' umgreifen das Exzenterelement 22a teilweise. Das erste Verbindungselement 34a und das zweite Verbindungselement 36a sind identisch ausgebildet. Der Befestigungsring 70a ist fest mit der Ausgangswelle 16a verbunden. Der Befestigungsring 70a ist auf die Ausgangswelle 16a aufgepresst (Figur 3).

Grundsätzlich wäre jedoch auch denkbar, dass ein Anliegen des ersten Verbindungselements 34a an dem ersten Exzenterelement 20a und ein Anliegen des zweiten Verbindungselements 36a an dem zweiten Exzenterelement 22a nicht über die jeweils zwei Fortsätze 72a, 72a', 74a, 74a' sondern über zwei Federelemente realisiert wird. Dabei wäre insbesondere denkbar, dass die Oszillationsantriebsvorrichtung 10a ein Federelement aufweist, das dazu vorgesehen ist, das erste Verbindungselement 34a des Bewegungswandlers 32a, zu einer ständigen Kontaktierung des ersten Verbindungselements 34a mit einer Außenfläche des ersten Exzenterelements 20a, in Richtung des ersten Exzenterelements 20a zu ziehen. Das Federelement könnte dabei insbesondere zwischen dem ersten Verbindungselement 34a und einer Innenseite des Gehäuses 58a eingespannt sein. Zudem wäre denkbar, dass die Oszillationsantriebsvorrichtung 10a ein weiteres Federelement aufweist, das dazu vorgesehen ist, das zweite Verbindungselement 36a des Bewegungswandlers 32a, zu einer ständigen Kontaktierung des zweiten Verbindungselements 36a mit einer Außenfläche des zweiten Exzenterelements 22a, in Richtung des zweiten Exzenterelements 22a zu ziehen.

Die Ausgangswelle 16a ist vollständig auf einer Seite der Eingangswelle 14a angeordnet. Die Ausgangswelle 16a ist unterhalb der Eingangswelle 14a angeordnet. Des Weiteren weist die Oszillationsantriebsvorrichtung 10a zwei Lagerelemente 40a, 76a zu einer Lagerung der Ausgangswelle 16a auf. Die Lagerelemente 40a, 76a sind jeweils als Wälzlager ausgebildet. Die Lagerelemente 40a, 76a sind jeweils als Kugellager ausgebildet. Die Lagerelemente 40a, 76a sind jeweils mit einem Innenring auf die Ausgangswelle 16a aufgepresst. Die Lagerelemente 40a, 76a sind beide auf einer der Eingangswelle 14a abgewandten Seite des Bewegungswandlers 32a auf der Ausgangswelle 16a angeordnet. Die Lagerelemente 40a, 76a sind zwischen dem Befestigungsring 70a des Bewegungswandlers 32a und der Werkzeugaufnahme 64a angeordnet. Die Lagerelemente 40a, 76a sind jeweils mit einem Außenring nicht weiter sichtbar in dem Gehäuse 58a der Handwerkzeugmaschine 12a befestigt. Der Befestigungsring 70a des Bewegungswandlers 32a ist an einem frei auskragenden Ende der Ausgangswelle 16a auf die Ausgangswelle 16a aufgepresst. Die Ausgangswelle 16a ist auf einer der Eingangswelle 14a zugewandten Seite fliegend gelagert.

Eine Drehbewegung der Antriebseinheit 62a und der von der Antriebseinheit 62a angetriebenen Eingangswelle 14a wird in einem Betriebszustand der Handwerkzeugmaschine 12a auf das auf die Eingangswelle 14a aufgepresste erste und zweite Exzenterelement 20a, 22a übertragen. Das erste und das zweite Exzenterelement 20a, 22a beschreiben dabei eine von einem Kreis abweichende Umlaufbahn um die Drehachse 28a der Eingangswelle 14a. Die Fortsätze 72a, 72a', 74a, 74a' des ersten und zweiten Verbindungselements 34a, 36a des Bewegungswandlers 32a nehmen jeweils eine Komponente der unrunden Bewegung des ersten und des zweiten Exzenterelements 20a, 22a in einer Richtung, welche senkrecht zu der Drehachse 26a der Ausgangswelle 16a und senkrecht zu der Drehachse 28a der Eingangswelle 14a steht, auf. Diese Komponente erzeugt an dem Bewegungswandler 32a eine oszillierende Bewegung, wobei das erste und zweite Verbindungselement 34a, 36a, in Rotationsrichtung um die Ausgangswelle 16a betrachtet, jeweils eine identische Rotationsbewegung erfahren. Die oszillierende Bewegung des Bewegungswandlers 32a wird über den Befestigungsring 70a auf die Ausgangswelle 16a und auf das an der Ausgangswelle 16a über die Werkzeugaufnahme 64a befestigte Einsatzwerkzeug 66a übertragen.

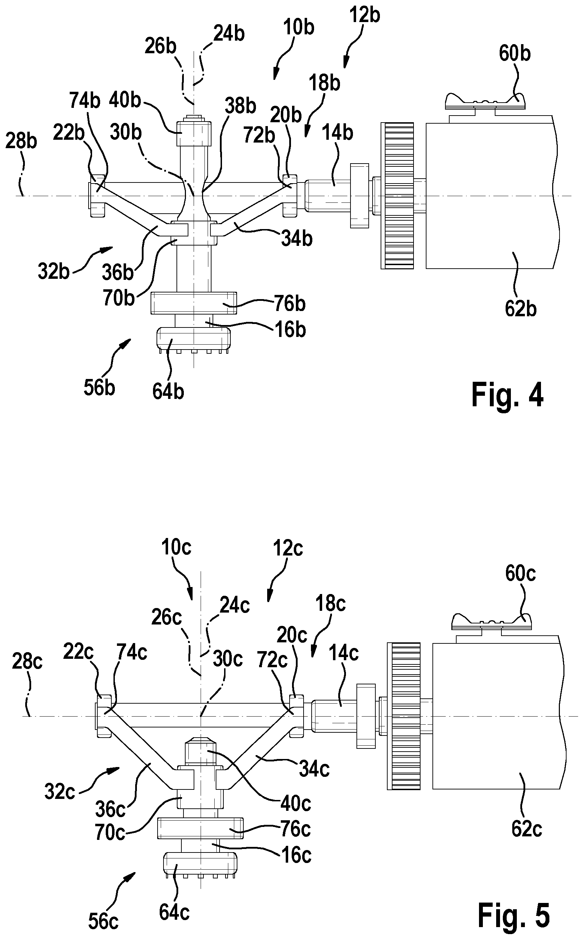

In den Figuren 4 bis 11 sind sechs weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 bis 11 ist der Buchstabe a durch die Buchstaben b bis g ersetzt.

Figur 4 zeigt einen Teilbereich einer Handwerkzeugmaschine 12b mit einer alternativen erfindungsgemäßen Oszillationsantriebsvorrichtung 10b und einem Teil einer Antriebseinheit 62b. Die Oszillationsantriebsvorrichtung 10b weist eine Eingangswelle 14b und eine Ausgangswelle 16b auf. Die Eingangswelle 14b ist direkt mit der Antriebseinheit 62b verbunden. Die Eingangswelle 14b wird in einem Betrieb der Handwerkzeugmaschine 12b durch die Antriebseinheit 62b angetrieben. Ferner weist die Oszillationsantriebsvorrichtung 10b eine Getriebeeinheit 18b auf. Die Getriebeeinheit 18b verbindet die Eingangswelle 14b und die Ausgangswelle 16b wirkungsmäßig. Die Getriebeeinheit 18b umfasst ein erstes Exzenterelement 20b zu einem oszillierenden Antrieb der Ausgangswelle 16b. Ferner umfasst die Getriebeeinheit 18b ein zweites Exzenterelement 22b zu einem oszillierenden Antrieb der Ausgangswelle 16b. Das erste Exzenterelement 20b und das zweite Exzenterelement 22b sind jeweils zu einem oszillierenden Antrieb der Ausgangswelle 16b vorgesehen.

Die Ausgangswelle 16b kreuzt die Eingangswelle 14b. Die Ausgangswelle 16b erstreckt sich über die Eingangswelle 14b und die Eingangswelle 14b erstreckt sich über die Ausgangswelle 16b. Die Ausgangswelle 16b weist eine Ausnehmung 38b auf. Die Ausnehmung 38b erstreckt sich senkrecht zu der Drehachse 26b der Ausgangswelle 16b durch ein Material der Ausgangswelle 16b. Die Ausnehmung 38b erstreckt sich vollständig durch ein Material der Ausgangswelle 16b. Die Ausnehmung 38b erstreckt sich annähernd parallel, je nach Stellung der Ausgangswelle 16b, zu einer Drehachse 28b der Eingangswelle 14b. Die Eingangswelle 14b erstreckt sich durch die Ausnehmung 38b. Die Ausgangswelle 16b weist in einem Bereich der Ausnehmung 38b einen Durchmesser auf, der größer ist, als ein Durchmesser der Eingangswelle 14b im Bereich eines Schnittpunktes 30b der Drehachsen 26b, 28b der Eingangswelle 14b und der Ausgangswelle 16b. Die Ausnehmung 38b weist ebenfalls einen Durchmesser auf, der größer ist, als ein Durchmesser der Eingangswelle 14b im Bereich des Schnittpunkts 30b. Dadurch kann eine Berührung zwischen der Eingangswelle 14b und der Ausgangswelle 16b bei einer oszillierenden Bewegung der Ausgangswelle 16b vermieden werden. Des Weiteren weist die Oszillationsantriebsvorrichtung 10b zwei Lagerelemente 40b, 76b zu einer Lagerung der Ausgangswelle 16b auf. Die Lagerelemente 40b, 76b sind jeweils als Wälzlager ausgebildet. Die Lagerelemente 40b, 76b sind jeweils als Kugellager ausgebildet. Die Lagerelemente 40b, 76b sind jeweils mit einem Innenring auf die Ausgangswelle 16b aufgepresst. Das erste Lagerelement 40b ist auf einer einer Werkzeugaufnahme 64b abgewandten Seite der Eingangswelle 14b auf der Ausgangswelle 16b angeordnet. Das erste Lagerelement 40b ist an einem der Werkzeugaufnahme 64b abgewandten Ende der Ausgangswelle 16b angeordnet. Das erste Lagerelement 40b ist über der Eingangswelle 14b angeordnet. Das zweite Lagerelement 76b ist auf einer der Eingangswelle 14b abgewandten Seite eines Bewegungswandlers 32b auf der Ausgangswelle 16b angeordnet. Das zweite Lagerelement 76b ist zwischen einem Befestigungsring 70b des Bewegungswandlers 32b und der Werkzeugaufnahme 64b angeordnet. Die Lagerelemente 40b, 76b sind jeweils mit einem Außenring nicht weiter sichtbar in einem Gehäuse der Handwerkzeugmaschine 12b befestigt.

Figur 5 zeigt einen Teilbereich einer Handwerkzeugmaschine 12c mit einer alternativen erfindungsgemäßen Oszillationsantriebsvorrichtung 10c und einem Teil einer Antriebseinheit 62c. Die Oszillationsantriebsvorrichtung 10c weist eine Eingangswelle 14c und eine Ausgangswelle 16c auf. Die Eingangswelle 14c ist direkt mit der Antriebseinheit 62c verbunden. Die Eingangswelle 14c wird in einem Betrieb der Handwerkzeugmaschine 12c durch die Antriebseinheit 62c angetrieben. Ferner weist die Oszillationsantriebsvorrichtung 10c eine Getriebeeinheit 18c auf. Die Getriebeeinheit 18c verbindet die Eingangswelle 14c und die Ausgangswelle 16c wirkungsmäßig. Die Getriebeeinheit 18c umfasst ein erstes Exzenterelement 20c zu einem oszillierenden Antrieb der Ausgangswelle 16c. Ferner umfasst die Getriebeeinheit 18c ein zweites Exzenterelement 22c zu einem oszillierenden Antrieb der Ausgangswelle 16c. Das erste Exzenterelement 20c und das zweite Exzenterelement 22c sind jeweils zu einem oszillierenden Antrieb der Ausgangswelle 16c vorgesehen.

Die Ausgangswelle 16c ist vollständig auf einer Seite der Eingangswelle 14c angeordnet. Die Ausgangswelle 16c ist unterhalb der Eingangswelle 14c angeordnet. Des Weiteren weist die Oszillationsantriebsvorrichtung 10c zwei Lagerelemente 40c, 76c zu einer Lagerung der Ausgangswelle 16c auf. Die Lagerelemente 40c, 76c sind jeweils als Wälzlager ausgebildet. Die Lagerelemente 40c, 76c sind jeweils als Kugellager ausgebildet. Die Lagerelemente 40c, 76c sind jeweils mit einem Innenring auf die Ausgangswelle 16c aufgepresst. Das erste Lagerelement 40c ist zwischen einem Verbindungsbereich, von der Ausgangswelle 16c und einem Bewegungswandler 32c, und der Eingangswelle 14c angeordnet. Das erste Lagerelement 40c ist zwischen einem Befestigungsring 70c und der Eingangswelle 14c angeordnet. Das erste Lagerelement 40c ist an einem einer Werkzeugaufnahme 64c abgewandten Ende der Ausgangswelle 16c angeordnet. Das zweite Lagerelement 76c ist auf einer der Eingangswelle 14c abgewandten Seite des Bewegungswandlers 32c auf der Ausgangswelle 16c angeordnet. Das zweite Lagerelement 76c ist zwischen dem Befestigungsring 70c des Bewegungswandlers 32c und der Werkzeugaufnahme 64c angeordnet. Die Lagerelemente 40c, 76c sind jeweils mit einem Außenring nicht weiter sichtbar in einem Gehäuse der Handwerkzeugmaschine 12c befestigt.

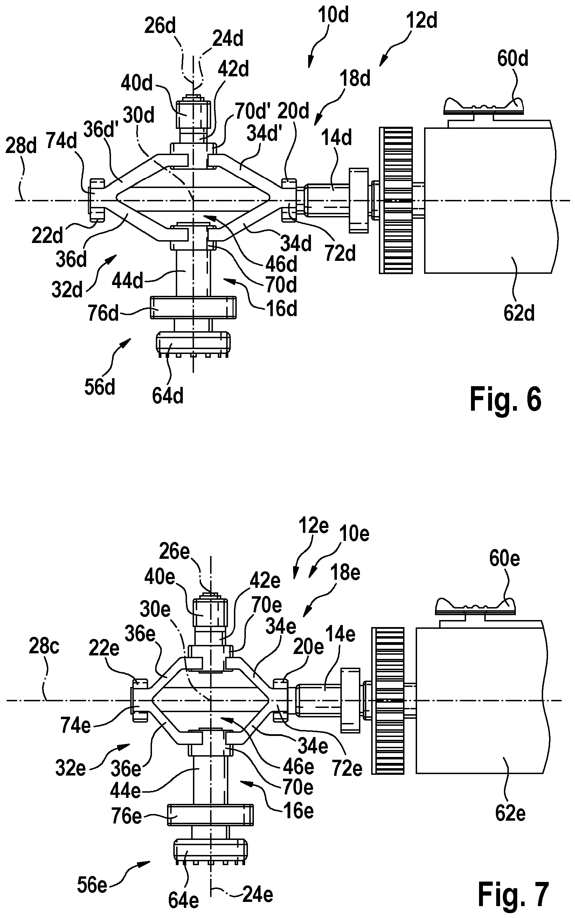

Figur 6 zeigt einen Teilbereich einer Handwerkzeugmaschine 12d mit einer alternativen erfindungsgemäßen Oszillationsantriebsvorrichtung 10d und einem Teil einer Antriebseinheit 62d. Die Oszillationsantriebsvorrichtung 10d weist eine Eingangswelle 14d und eine Ausgangswelle 16d auf. Die Eingangswelle 14d ist direkt mit der Antriebseinheit 62d verbunden. Die Eingangswelle 14d wird in einem Betrieb der Handwerkzeugmaschine 12d durch die Antriebseinheit 62d angetrieben. Ferner weist die Oszillationsantriebsvorrichtung 10d eine Getriebeeinheit 18d auf. Die Getriebeeinheit 18d verbindet die Eingangswelle 14d und die Ausgangswelle 16d wirkungsmäßig. Die Getriebeeinheit 18d umfasst ein erstes Exzenterelement 20d zu einem oszillierenden Antrieb der Ausgangswelle 16d. Ferner umfasst die Getriebeeinheit 18d ein zweites Exzenterelement 22d zu einem oszillierenden Antrieb der Ausgangswelle 16d. Das erste Exzenterelement 20d und das zweite Exzenterelement 22d sind jeweils zu einem oszillierenden Antrieb der Ausgangswelle 16d vorgesehen.

Die Ausgangswelle 16d kreuzt teilweise die Eingangswelle 14d. Die Ausgangswelle 16d erstreckt sich über die Eingangswelle 14d und die Eingangswelle 14d erstreckt sich über die Ausgangswelle 16d. Die Ausgangswelle 16d besteht aus zwei Teilwellen 42d, 44d. Die Teilwellen 42d, 44d weisen eine identische Drehachse 26d auf. Die zweite Teilwelle 44d ist mit einer Werkzeugaufnahme 64d verbunden. Die zwei Teilwellen 42d, 44d sind zueinander beabstandet angeordnet. Zwischen den Teilwellen 42d, 44d ist eine Lücke 46d angeordnet. Die Eingangswelle 14d erstreckt sich durch die Lücke 46d zwischen der ersten Teilwelle 42d und der zweiten Teilwelle 44d. Die Teilwellen 42d, 44d sind über einen Bewegungswandler 32d der Getriebeeinheit 18d verbunden. Des Weiteren weist die Oszillationsantriebsvorrichtung 10d zwei Lagerelemente 40d, 76d zu einer Lagerung der Ausgangswelle 16d auf. Die Lagerelemente 40d, 76d sind jeweils als Wälzlager ausgebildet. Die Lagerelemente 40d, 76d sind jeweils als Kugellager ausgebildet. Die Lagerelemente 40d, 76d sind jeweils mit einem Innenring auf die Ausgangswelle 16d bzw. die Teilwellen 42d, 44d der Ausgangswelle 16d aufgepresst. Das erste Lagerelement 40d ist an der ersten Teilwelle 42d angeordnet. Das erste Lagerelement 40d ist an einem der Eingangswelle 14d angewandten Ende der ersten Teilwelle 42d angeordnet. Das zweite Lagerelement 76d ist an der zweiten Teilwelle 44d angeordnet. Das zweite Lagerelement 76d ist zwischen der Eingangswelle 14d und der Werkzeugaufnahme 64d an der Ausgangswelle 16d angeordnet. Die Lagerelemente 40d, 76d sind jeweils mit einem Außenring nicht weiter sichtbar in einem Gehäuse der Handwerkzeugmaschine 12d befestigt.

Ferner weist die Getriebeeinheit 18d den Bewegungswandler 32d auf. Über den Bewegungswandler 32d sind die Exzenterelemente 20d, 22d wirkungsmäßig mit der Ausgangswelle 16d verbunden. Über den Bewegungswandler 32d sind die Exzenterelemente 20d, 22d wirkungsmäßig mit den Teilwellen 42d, 44d der Ausgangswelle 16d verbunden. Der Bewegungswandler 32d ist dazu vorgesehen die Bewegung der Exzenterelemente 20d, 22d in eine Oszillationsbewegung umzuwandeln und diese auf die Ausgangswelle 16d zu übertragen. Der Bewegungswandler 32d weist zwei erste Verbindungselemente 34d, 34d' und zwei zweite Verbindungselement 36d, 36d' auf. Die Verbindungselemente 34d, 34d', 36d, 36d' sind jeweils als Arm ausgebildet. Ferner weist der Bewegungswandler 32d zwei Befestigungsringe 70d, 70d' auf. Die Verbindungselemente 34d, 36d sind jeweils einstückig mit dem ersten Befestigungsring 70d verbunden und die Verbindungselemente 34d', 36d' sind jeweils einstückig mit dem zweiten Befestigungsring 70d' verbunden. Die Verbindungselemente 34d, 34d', 36d, 36d' ragen jeweils auf gegenüberliegenden Seiten aus dem zugehörigen Befestigungsring 70d, 70d'. Die ersten Verbindungselemente 34d, 34d' liegen an dem ersten Exzenterelement 20d an. Die ersten Verbindungselemente 34d, 34d' weisen zu einem sicheren Anliegen an dem ersten Exzenterelement 20d, auf einer den Befestigungsringen 70d, 70d' abgewandten Seite, zwei gemeinsame Fortsätze 72d, 72d' auf. Über die Fortsätze 72d, 72d' sind die ersten Verbindungselemente 34d, 34d' miteinander verbunden. Die Fortsätze 72d, 72d' sind dazu, parallel zu einer Drehachse 28d der Eingangswelle 14d betrachtet, in einer Ebene senkrecht zu der Drehachse 26d der Ausgangswelle 16d auf gegenüberliegenden Seiten des ersten Exzenterelements 20d angeordnet. Die Fortsätze 72d, 72d' umgreifen das Exzenterelement 20d teilweise. Die zweiten Verbindungselemente 36d, 36d' liegen an dem zweiten Exzenterelement 22d an. Die zweiten Verbindungselemente 36d, 36d' weisen zu einem sicheren Anliegen an dem zweiten Exzenterelement 22d, auf einer den Befestigungsringen 70d, 70d' abgewandten Seite, zwei gemeinsame Fortsätze 74d, 74d' auf. Über die Fortsätze 74d, 74d' sind die zweiten Verbindungselemente 36d, 36d' miteinander verbunden. Die Fortsätze 74d, 74d' sind dazu, parallel zu der Drehachse 28d der Eingangswelle 14d betrachtet, in einer Ebene senkrecht zu der Drehachse 26d der Ausgangswelle 16d auf gegenüberliegenden Seiten des zweiten Exzenterelements 22d angeordnet. Die Fortsätze 74d, 74d' umgreifen das Exzenterelement 22d teilweise. Die ersten Verbindungselemente 34d, 34d' und die zweiten Verbindungselemente 36d, 36d' sind identisch ausgebildet. Der erste Befestigungsring 70d ist fest mit der zweiten Teilwelle 44d der Ausgangswelle 16d verbunden. Der zweite Befestigungsring 70d' ist fest mit der ersten Teilwelle 42d der Ausgangswelle 16d verbunden. Die Befestigungsringe 70d, 70d' sind jeweils auf den Teilwellen 42d, 44d der Ausgangswelle 16d aufgepresst. Die Teilwellen 42d, 44d der Ausgangswelle 16d sind zu einer Kraftübertragung über den Bewegungswandler 32d verbunden.

Figur 7 zeigt einen Teilbereich einer Handwerkzeugmaschine 12e mit einer alternativen erfindungsgemäßen Oszillationsantriebsvorrichtung 10e und einem Teil einer Antriebseinheit 62e. Die Oszillationsantriebsvorrichtung 10e des fünften Ausführungsbeispiels ist annähernd identisch zu der Oszillationsantriebsvorrichtung 10d des vierten Ausführungsbeispiels ausgestaltet. Die Oszillationsantriebsvorrichtung 10e weist lediglich einen Bewegungswandler 32e mit gegenüber dem Bewegungswandler 32d verkürzten Verbindungselementen 34e, 34e', 36e, 36e' auf. Zudem ist ein Abstand zwischen einem ersten Exzenterelement 20e einer Getriebeeinheit 18e und einem zweiten Exzenterelement 22e der Getriebeeinheit 18e geringer. Da die Kraftübertragung zwischen einer Eingangswelle 14e und einer Ausgangswelle 16e über die zwei Exzenterelemente 20e, 22e erfolgt, muss jedes der Exzenterelemente 20e, 22e nur die halbe Kraft übertragen. Daher können die Verbindungselemente 34e, 34e', 36e, 36e' des Bewegungswandlers 32e besonders kurz ausgestaltet werden.

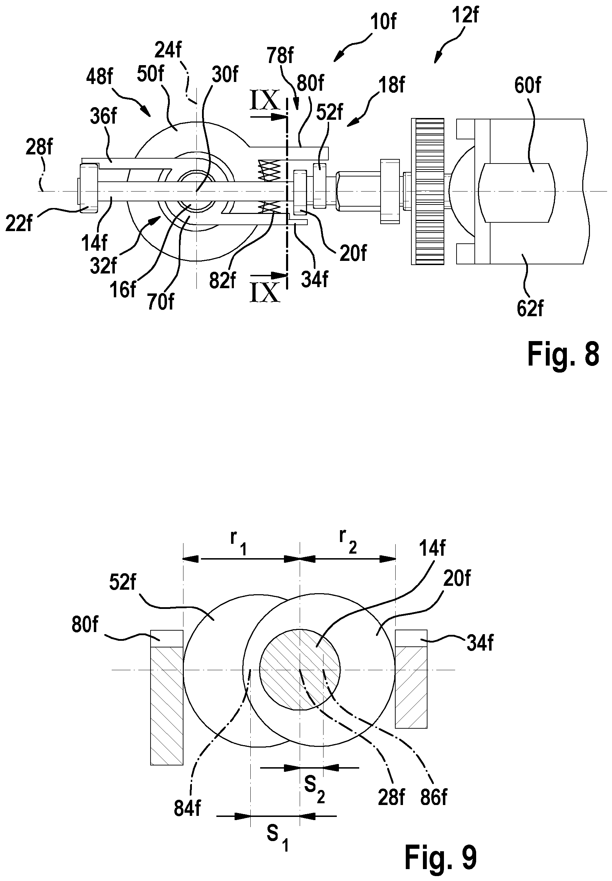

Figur 8 zeigt einen Teilbereich einer Handwerkzeugmaschine 12f mit einer alternativen erfindungsgemäßen Oszillationsantriebsvorrichtung 10f und einem Teil einer Antriebseinheit 62f. Die Oszillationsantriebsvorrichtung 10f weist eine Eingangswelle 14f und eine Ausgangswelle 16f auf. Die Eingangswelle 14f ist direkt mit der Antriebseinheit 62f verbunden. Die Eingangswelle 14f wird in einem Betrieb der Handwerkzeugmaschine 12f durch die Antriebseinheit 62f angetrieben. Ferner weist die Oszillationsantriebsvorrichtung 10f eine Getriebeeinheit 18f auf. Die Getriebeeinheit 18f verbindet die Eingangswelle 14f und die Ausgangswelle 16f wirkungsmäßig. Die Getriebeeinheit 18f umfasst ein erstes Exzenterelement 20f zu einem oszillierenden Antrieb der Ausgangswelle 16f. Ferner umfasst die Getriebeeinheit 18f ein zweites Exzenterelement 22f zu einem oszillierenden Antrieb der Ausgangswelle 16f. Das erste Exzenterelement 20f und das zweite Exzenterelement 22f sind jeweils zu einem oszillierenden Antrieb der Ausgangswelle 16f vorgesehen.

Ferner weist die Getriebeeinheit 18f einen Bewegungswandler 32f auf. Über den Bewegungswandler 32f sind die Exzenterelemente 20f, 22f wirkungsmäßig mit der Ausgangswelle 16f verbunden. Der Bewegungswandler 32f ist dazu vorgesehen die Bewegung der Exzenterelemente 20f, 22f in eine Oszillationsbewegung umzuwandeln und diese auf die Ausgangswelle 16f zu übertragen. Der Bewegungswandler 32f weist ein erstes Verbindungselement 34f und ein zweites Verbindungselement 36f auf. Die Verbindungselemente 34f, 36f sind jeweils als Arm ausgebildet. Ferner weist der Bewegungswandler 32f einen Befestigungsring 70f auf. Die Verbindungselemente 34f, 36f sind jeweils einstückig mit dem Befestigungsring 70f verbunden. Die Verbindungselemente 34f, 36f ragen jeweils auf gegenüberliegenden Seiten aus dem Befestigungsring 70f. Das erste Verbindungselement 34f liegt an dem ersten Exzenterelement 20f an. Das zweite Verbindungselement 36f liegt an dem zweiten Exzenterelement 22f an. Die Verbindungselemente 34f, 36f liegen jeweils bezogen auf eine Drehachse 28f der Eingangswelle 14f auf gegenüberliegenden Seiten an dem jeweils zugeordneten Exzenterelement 20f, 22f an. Dadurch kann insbesondere eine gleichmäßige Kraftverteilung erreicht werden. Grundsätzlich wäre jedoch auch denkbar, dass die Verbindungselemente 34f, 36f jeweils bezogen auf die Drehachse 28f der Eingangswelle 14f auf der gleichen Seite an dem jeweils zugeordneten Exzenterelement 20f, 22f anliegen. Das erste Verbindungselement 34f und das zweite Verbindungselement 36f sind jeweils spiegelverkehrt ausgebildet. Der Befestigungsring 70f ist fest mit der Ausgangswelle 16f verbunden. Der Befestigungsring 70f ist auf die Ausgangswelle 16f aufgepresst.

Des Weiteren weist die Getriebeeinheit 18f ein weiteres Exzenterelement 52f auf. Das weitere Exzenterelement 52f ist als Exzenterscheibe ausgebildet. Das weitere Exzenterelement 52f ist auf der Eingangswelle 14f angeordnet. Ferner ist das weitere Exzenterelement 52f auf der Eingangswelle 14f aufgepresst. Das weitere Exzenterelement 52f ist direkt neben dem ersten Exzenterelement 20f auf die Eingangswelle 14f aufgepresst. Grundsätzlich wäre jedoch auch eine andere, einem Fachmann als sinnvoll erscheinende Position des weiteren Exzenterelements 52f auf der Eingangswelle 14f denkbar. Das weitere Exzenterelement 52f weist gegenüber dem ersten Exzenterelement 20f einen Winkelversatz um die Drehachse 28f der Eingangswelle 14f auf. Der Winkelversatz beträgt 180°. Das weitere Exzenterelement 52f ist zu einem oszillierenden Antrieb einer Ausgleichsmasse 50f einer Vibrationsausgleichseinheit 48f vorgesehen. Grundsätzlich wäre jedoch auch denkbar, dass die Getriebeeinheit 18f zwei weitere Exzenterelemente 52f zu einem oszillierenden Antrieb einer Ausgleichsmasse 50f aufweist, die jeweils auf gegenüberliegenden Seiten eines Schnittpunkts 30f der Drehachsen 28f der Eingangswelle 14f und der Ausgangswelle 16f angeordnet sind.

Die Oszillationsantriebsvorrichtung 10f weist die Vibrationsausgleichseinheit 48f auf. Die Vibrationsausgleichseinheit 48f weist die Ausgleichsmasse 50f auf. Die Ausgleichsmasse 50f ist zum Ausgleich einer Vibration vorgesehen. Die Ausgleichsmasse 50f ist in einem Betrieb, zum Ausgleich einer Vibration entgegen einer Bewegungsrichtung der Ausgangswelle 16f angetrieben. Die Ausgleichsmasse 50f ist nicht weiter sichtbar drehbar auf der Ausgangswelle 16f gelagert. Grundsätzlich wäre jedoch auch eine alternative Anordnung denkbar. Die Ausgleichsmasse 50f wird von einem weiteren Bewegungswandler 78f angetrieben.

Die Getriebeeinheit 18f weist den weiteren Bewegungswandler 78f auf. Der Bewegungswandler 78f verbindet das weitere Exzenterelement 52f, das zu einem oszillierenden Antrieb der Ausgleichsmasse 50f vorgesehen ist, wirkungsmäßig mit der Ausgleichsmasse 50f. Der Bewegungswandler 78f ist dazu vorgesehen, die Bewegung des weiteren Exzenterelements 52f in eine Oszillationsbewegung umzuwandeln und diese auf die Ausgleichsmasse 50f zu übertragen. Der Bewegungswandler 78f weist ein Verbindungselement 80f auf. Das Verbindungselement 80f ist als Arm ausgebildet. Das Verbindungselement 80f ist einstückig mit der Ausgleichsmasse 50f ausgebildet. Das Verbindungselement 80f ragt aus der Ausgleichsmasse 50f in Richtung des weiteren Exzenterelements 52f. Das Verbindungselement 80f liegt mit einem der Ausgleichsmasse 50f abgewandten Ende an dem weiteren Exzenterelement 52f an. Das Verbindungselement 80f liegt bezogen auf die Drehachse 28f der Eingangswelle 14f auf einer dem ersten Verbindungselement 34f gegenüberliegenden Seite an dem weiteren Exzenterelement 52f an.

Ferner weist die Oszillationsantriebsvorrichtung 10f ein Federelement 82f auf. Das Federelement 82f ist zwischen dem Verbindungselement 80f des weiteren Bewegungswandlers 78f und dem ersten Verbindungselement 34f des Bewegungswandlers 32f angeordnet. Das Federelement 82f ist dazu vorgesehen, eine ständige Kontaktierung des Verbindungselements 80f des weiteren Bewegungswandlers 78f mit dem weiteren Exzenterelement 52f, das zu einem oszillierenden Antrieb der Ausgleichsmasse 50f vorgesehen ist, zu gewährleisten. Ferner ist das Federelement 82f dazu vorgesehen, eine ständige Kontaktierung des ersten Verbindungselements 34f des Bewegungswandlers 32f mit dem ersten Exzenterelement 20f, das zu einem oszillierenden Antrieb der Ausgangswelle 16f vorgesehen ist, zu gewährleisten. Zudem ist das Federelement 82f indirekt dazu vorgesehen, auch eine ständige Kontaktierung des zweiten Verbindungselements 36f des Bewegungswandlers 32f mit dem zweiten Exzenterelement 22f, das zu einem oszillierenden Antrieb der Ausgangswelle 16f vorgesehen ist, zu gewährleisten.

Das weitere Exzenterelement 52f, das zu einem oszillierenden Antrieb der Ausgleichsmasse 50f vorgesehen ist, weist einen maximalen Rotationsradius r₁ auf, der größer ist, als ein maximaler Rotationsradius r₂ des ersten Exzenterelements 20f und des zweiten Exzenterelements 22f, die zu einem oszillierenden Antrieb der Ausgangswelle 16f vorgesehen sind. Grundsätzlich wäre jedoch auch denkbar, dass der maximale Rotationsradius r₁ und der maximale Rotationsradius r₂ gleich groß sind. Die Exzenterelemente 20f, 22f, 52f weisen jeweils einen identischen Durchmesser auf, jedoch weist das weitere Exzenterelement 52f eine Entfernung s₁ zwischen der Drehachse 28f der Eingangswelle 14f und einem geometrischen Mittelpunkt 84f des weiteren Exzenterelements 52f auf, die größer ist als eine Entfernung s₂ zwischen der Drehachse 28f der Eingangswelle 14f und einem geometrischen Mittelpunkt 86f des ersten und zweiten Exzenterelements 20f, 22f (Figur 9).

Eine Drehbewegung der Antriebseinheit 62f und der von der Antriebseinheit 62f angetriebenen Eingangswelle 14f wird in einem Betriebszustand der Handwerkzeugmaschine 12f auf das auf die Eingangswelle 14f aufgepresste erste und zweite Exzenterelement 20f, 22f sowie auf das weitere Exzenterelement 52f übertragen. Das erste und das zweite Exzenterelement 20f, 22f sowie das weitere Exzenterelement 52f beschreiben dabei eine von einem Kreis abweichende Umlaufbahn um die Drehachse 28f der Eingangswelle 14f. Das erste und zweite Verbindungselement 34f, 36f des Bewegungswandlers 32f sowie das Verbindungselement 80f des weiteren Bewegungswandlers 78f nehmen jeweils eine Komponente der unrunden Bewegung des ersten und des zweiten Exzenterelements 20f, 22f sowie des weiteren Exzenterelements 52f in einer Richtung auf, welche senkrecht zu der Drehachse 26f der Ausgangswelle 16f und senkrecht zu der Drehachse 28f der Eingangswelle 14f steht, auf. Diese Komponente erzeugt an den Bewegungswandlern 32f, 78f eine oszillierende Bewegung. Die Bewegung des Bewegungswandlers 32f ist einer Bewegung des weiteren Bewegungswandlers 78f entgegen gerichtet. Die oszillierende Bewegung des Bewegungswandlers 32f wird über den Befestigungsring 70f auf die Ausgangswelle 16f und auf das an der Ausgangswelle 16f über die Werkzeugaufnahme befestigte Einsatzwerkzeug übertragen. Die oszillierende Bewegung des weiteren Bewegungswandlers 32f wird auf die einstückig mit dem Verbindungselement 80f des weiteren Bewegungswandlers 32f verbundene und drehbar auf der Ausgangswelle 16f gelagerte Ausgleichsmasse 50f übertragen.

Durch die Phasenverschiebung zwischen der oszillierenden Ausgangswelle 16f und der Ausgleichsmasse 50f, werden Vibrationen, die in einem Betriebszustand der Handwerkzeugmaschine 12f durch Trägheitsmomente, welche von einer oszillierenden Bewegung des Einsatzwerkzeugs hervorgerufen werden, bedingt sind, von der Ausgleichsmasse 50f ausgeglichen.

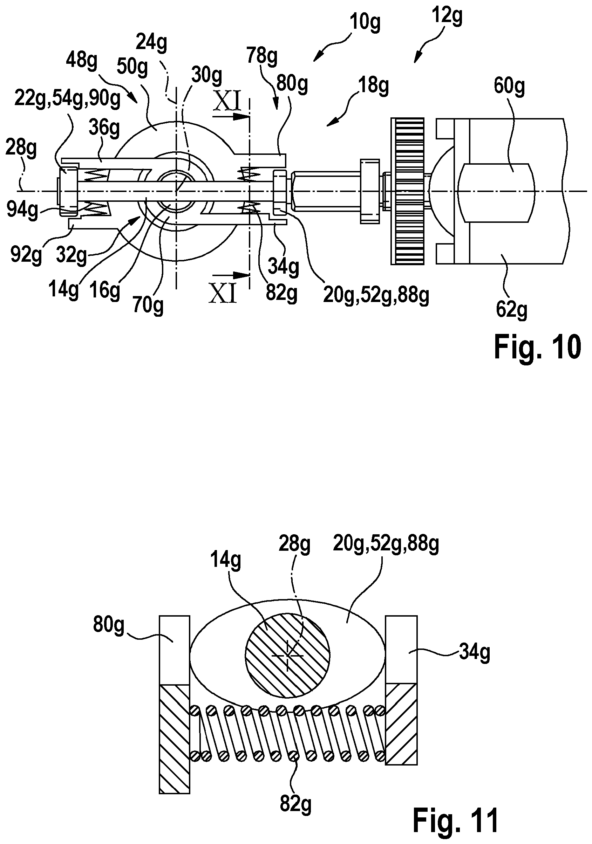

Figur 10 zeigt einen Teilbereich einer Handwerkzeugmaschine 12g mit einer alternativen erfindungsgemäßen Oszillationsantriebsvorrichtung 10g und einem Teil einer Antriebseinheit 62g. Die Oszillationsantriebsvorrichtung 10g weist eine Eingangswelle 14g und eine Ausgangswelle 16g auf. Die Eingangswelle 14g ist direkt mit der Antriebseinheit 62g verbunden. Die Eingangswelle 14g wird in einem Betrieb der Handwerkzeugmaschine 12g durch die Antriebseinheit 62g angetrieben. Ferner weist die Oszillationsantriebsvorrichtung 10g eine Getriebeeinheit 18g auf. Die Getriebeeinheit 18g verbindet die Eingangswelle 14g und die Ausgangswelle 16g wirkungsmäßig. Die Getriebeeinheit 18g umfasst ein erstes Exzenterelement 20g zu einem oszillierenden Antrieb der Ausgangswelle 16g. Ferner umfasst die Getriebeeinheit 18g ein zweites Exzenterelement 22g zu einem oszillierenden Antrieb der Ausgangswelle 16g. Das erste Exzenterelement 20g und das zweite Exzenterelement 22g sind jeweils zu einem oszillierenden Antrieb der Ausgangswelle 16g vorgesehen.

Ferner weist die Getriebeeinheit 18g einen Bewegungswandler 32g auf. Über den Bewegungswandler 32g sind die Exzenterelemente 20g, 22g wirkungsmäßig mit der Ausgangswelle 16g verbunden. Der Bewegungswandler 32g ist dazu vorgesehen, die Bewegung der Exzenterelemente 20g, 22g in eine Oszillationsbewegung umzuwandeln und diese auf die Ausgangswelle 16g zu übertragen. Der Bewegungswandler 32g weist ein erstes Verbindungselement 34g und ein zweites Verbindungselement 36g auf. Die Verbindungselemente 34g, 36g sind jeweils als Arm ausgebildet. Ferner weist der Bewegungswandler 32g einen Befestigungsring 70g auf. Die Verbindungselemente 34g, 36g sind jeweils einstückig mit dem Befestigungsring 70g verbunden. Die Verbindungselemente 34g, 36g ragen jeweils auf gegenüberliegenden Seiten aus dem Befestigungsring 70g. Das erste Verbindungselement 34g liegt an dem ersten Exzenterelement 20g an. Das zweite Verbindungselement 36g liegt an dem zweiten Exzenterelement 22g an. Die Verbindungselemente 34g, 36g liegen jeweils bezogen auf eine Drehachse 28g der Eingangswelle 14g auf gegenüberliegenden Seiten an dem jeweils zugeordneten Exzenterelement 20g, 22g an. Dadurch kann insbesondere eine gleichmäßige Kraftverteilung erreicht werden. Grundsätzlich wäre jedoch auch denkbar, dass die Verbindungselemente 34g, 36g jeweils bezogen auf die Drehachse 28g der Eingangswelle 14g auf der gleichen Seite an dem jeweils zugeordneten Exzenterelement 20g, 22g anliegen. Das erste Verbindungselement 34g und das zweite Verbindungselement 36g sind jeweils spiegelverkehrt ausgebildet. Der Befestigungsring 70g ist fest mit der Ausgangswelle 16g verbunden. Der Befestigungsring 70g ist auf die Ausgangswelle 16g aufgepresst.

Des Weiteren weist die Getriebeeinheit 18g zwei weitere Exzenterelemente 52g, 54g auf. Die weiteren Exzenterelemente 52g, 54g sind auf der Eingangswelle 14g angeordnet. Ferner sind die weiteren Exzenterelemente 52g, 54g auf der Eingangswelle 14g aufgepresst. Das erste weitere Exzenterelement 52g ist einstückig mit dem ersten Exzenterelement 20g ausgebildet und auf die Eingangswelle 14g aufgepresst. Das erste weitere Exzenterelement 52g und das erste Exzenterelement 20g bilden gemeinsam eine erste elliptische Exzenterscheibe 88g, wobei die Drehachse 28g der Eingangswelle 14g in einem geometrischen Mittelpunkt der ersten Exzenterscheibe 88g liegt. Ferner ist das zweite weitere Exzenterelement 54g einstückig mit dem zweiten Exzenterelement 22g ausgebildet und auf die Eingangswelle 14g aufgepresst. Das zweite weiteren Exzenterelement 54g und das zweite Exzenterelement 22g bilden gemeinsam eine zweite elliptische Exzenterscheibe 90g, wobei die Drehachse 28g der Eingangswelle 14g in einem geometrischen Mittelpunkt der zweiten Exzenterscheibe 90g liegt. Die Exzenterscheiben 88g, 90g sind jeweils auf gegenüberliegenden Seiten eines Schnittpunkts 30g der Drehachsen 28g der Eingangswelle 14g und der Ausgangswelle 16g angeordnet (Figur 11).

Die Oszillationsantriebsvorrichtung 10g weist die Vibrationsausgleichseinheit 48g auf. Die Vibrationsausgleichseinheit 48g weist die Ausgleichsmasse 50g auf. Die Ausgleichsmasse 50g ist zum Ausgleich einer Vibration vorgesehen. Die Ausgleichsmasse 50g ist in einem Betrieb, zum Ausgleich einer Vibration entgegen einer Bewegungsrichtung der Ausgangswelle 16g angetrieben. Die Ausgleichsmasse 50g ist nicht weiter sichtbar drehbar auf der Ausgangswelle 16g gelagert. Grundsätzlich wäre jedoch auch eine alternative Anordnung denkbar. Die Ausgleichsmasse 50g wird von einem weiteren Bewegungswandler 78g angetrieben.

Die Getriebeeinheit 18g weist den weiteren Bewegungswandler 78g auf. Der weitere Bewegungswandler 78g verbindet die Exzenterscheiben 88g, 90g wirkungsmäßig mit der Ausgleichsmasse 50g. Der Bewegungswandler 78g ist dazu vorgesehen die Bewegung der Exzenterscheiben 88g, 90g in eine Oszillationsbewegung umzuwandeln und diese auf die Ausgleichsmasse 50g zu übertragen. Der Bewegungswandler 78g weist zwei Verbindungselemente 80g, 92g auf. Die Verbindungselemente 80g, 92g sind als Arm ausgebildet. Die Verbindungselemente 80g, 92g sind einstückig mit der Ausgleichsmasse 50g ausgebildet. Die Verbindungselemente 80g, 92g ragen auf gegenüberliegenden Seiten aus der Ausgleichsmasse 50g in Richtung der weiteren Exzenterelemente 52g, 54g. Die Verbindungselemente 80g, 92g liegen jeweils mit einem der Ausgleichsmasse 50g abgewandten Ende an einem der Exzenterscheiben 88g, 90g an. Das erste Verbindungselement 80g des weiteren Bewegungswandlers 78g liegt bezogen auf die Drehachse 28g der Eingangswelle 14g auf einer dem ersten Verbindungselement 34g gegenüberliegenden Seite an der ersten Exzenterscheibe 88g an. Das zweite Verbindungselement 92g des weiteren Bewegungswandlers 78g liegt bezogen auf die Drehachse 28g der Eingangswelle 14g auf einer dem zweiten Verbindungselement 36g gegenüberliegenden Seite an der zweiten Exzenterscheibe 90g an.

Ferner weist die Oszillationsantriebsvorrichtung 10g zwei Federelemente 82g, 94g auf. Die Federelemente 82g, 94g sind zwischen den Verbindungselementen 80g, 92g des weiteren Bewegungswandlers 78g und den Verbindungselementen 34g, 36g des Bewegungswandlers 32g angeordnet. Die Federelemente 82g, 94g sind dazu vorgesehen, eine ständige Kontaktierung der Verbindungselemente 80g, 92g des weiteren Bewegungswandlers 78g mit den Exzenterscheiben 88g, 90g zu gewährleisten. Ferner sind die Federelemente 82g, 94g dazu vorgesehen, eine ständige Kontaktierung der Verbindungselemente 34g, 36g des Bewegungswandlers 32g mit den Exzenterscheiben 88g, 90g zu gewährleisten.

Eine Drehbewegung der Antriebseinheit 62g und der von der Antriebseinheit 62g angetriebenen Eingangswelle 14g wird in einem Betriebszustand der Handwerkzeugmaschine 12g auf die auf die Eingangswelle 14g aufgepressten Exzenterscheiben 88g, 90g übertragen. Die aufgepressten Exzenterscheiben 88g, 90g beschreiben dabei eine von einem Kreis abweichende Umlaufbahn um die Drehachse 28g der Eingangswelle 14g. Die Verbindungselemente 34g, 36g des Bewegungswandlers 32g sowie die Verbindungselemente 80g, 92g des weiteren Bewegungswandlers 78g nehmen jeweils eine Komponente der unrunden Bewegung der ersten und der zweiten aufgepressten Exzenterscheiben 88g, 90g in einer Richtung auf, welche senkrecht zu der Drehachse 26g der Ausgangswelle 16g und senkrecht zu der Drehachse 28g der Eingangswelle 14g steht, auf. Diese Komponente erzeugt an den Bewegungswandlern 32g, 78g eine oszillierende Bewegung. Die Bewegung des Bewegungswandlers 32g ist einer Bewegung des weiteren Bewegungswandlers 78g entgegen gerichtet. Die oszillierende Bewegung des Bewegungswandlers 32g wird über den Befestigungsring 70g auf die Ausgangswelle 16g und auf das an der Ausgangswelle 16g über die Werkzeugaufnahme befestigte Einsatzwerkzeug übertragen. Die oszillierende Bewegung des weiteren Bewegungswandlers 32g wird auf die einstückig mit den Verbindungselementen 80g, 92g des weiteren Bewegungswandlers 32g verbundene und drehbar auf der Ausgangswelle 16g gelagerte Ausgleichsmasse 50g übertragen.

## Patentansprüche

1. Oszillationsantriebsvorrichtung für eine Handwerkzeugmaschine (12a; 12b; 12c; 12d; 12e; 12f; 12g), mit zumindest einer Eingangswelle (14a; 14b; 14c; 14d; 14e; 14f; 14g), mit zumindest einer Ausgangswelle (16a; 16b; 16c; 16d; 16e; 16f; 16g) und mit zumindest einer die Eingangswelle (14a; 14b; 14c; 14d; 14e; 14f; 14g) mit der Ausgangswelle (16a; 16b; 16c; 16d; 16e; 16f; 16g) wirkungsmäßig verbindenden Getriebeeinheit (18a; 18b; 18c; 18d; 18e; 18f; 18g), die zumindest ein Exzenterelement (20a; 20b; 20c; 20d; 20e; 20f; 20g) zu einem oszillierenden Antrieb der Ausgangswelle (16a; 16b; 16c; 16d; 16e; 16f; 16g) umfasst, wobei die Getriebeeinheit (18a; 18b; 18c; 18d; 18e; 18f; 18g) zumindest ein weiteres Exzenterelement (22a; 22b; 22c; 22d; 22e; 22f; 22g) zu einem oszillierenden Antrieb der Ausgangswelle (16a; 16b; 16c; 16d; 16e; 16f; 16g) umfasst, **dadurch gekennzeichnet, dass** die Exzenterelemente (20a, 22a; 20b, 22b; 20c, 22c; 20d, 22d; 20e, 22e; 20f, 22f; 20g, 22g) auf gegenüberliegenden Seiten einer gedachten Ebene (24a; 24b; 24c; 24d; 24e; 24f; 24g) angeordnet sind, in welcher eine Drehachse (26a; 26b; 26c; 26d; 26e; 26f; 26g) der Ausgangswelle (16a; 16b; 16c; 16d; 16e; 16f; 16g) liegt und die mit einer Drehachse (28a; 28b; 28c; 28d; 28e; 28f; 28g) der Eingangswelle (14a; 14b; 14c; 14d; 14e; 14f; 14g)einen kleinsten Winkel von zumindest 70° einschließt, wobei ein erstes der Exzenterelemente (20a; 20b; 20c; 20d; 20e; 20f; 20g) auf der Eingangswelle (14a; 14b; 14c; 14d; 14e; 14f; 14g) entlang der Drehachse (28a; 28b; 28c; 28d; 28e; 28f; 28g) der Eingangswelle (14a; 14b; 14c; 14d; 14e; 14f; 14g) vor und ein zweites der Exzenterelemente (22a; 22b; 22c; 22d; 22e; 22f; 22g) auf der Eingangswelle (14a; 14b; 14c; 14d; 14e; 14f; 14g) entlang der Drehachse (28a; 28b; 28c; 28d; 28e; 28f; 28g) der Eingangswelle (14a; 14b; 14c; 14d; 14e; 14f; 14g) hinter einem Schnittpunkt (30a; 30b; 30c; 30d; 30e; 30f; 30g) der Drehachsen(26a, 28a; 26b, 28b; 26c, 28c; 26d, 28d; 26e, 28e; 26f, 28f; 26g, 28g) der Eingangswelle (14a; 14b; 14c; 14d; 14e; 14f; 14g) und der Ausgangswelle (16a; 16b; 16c; 16d; 16e; 16f; 16g) angeordnet ist.

2. Oszillationsantriebsvorrichtung nach einem der vorhergehenden Ansprüche, **dadurch gekennzeichnet, dass** die Getriebeeinheit (18a; 18b; 18c; 18d; 18e; 18f; 18g) zumindest einen Bewegungswandler (32a; 32b; 32c; 32d; 32e; 32f; 32g) aufweist, über welchen die Exzenterelemente (20a, 22a; 20b, 22b; 20c, 22c; 20d, 22d; 20e, 22e; 20f, 22f; 20g, 22g) wirkungsmäßig mit der Ausgangswelle (16a; 16b; 16c; 16d; 16e; 16f; 16g) verbunden sind.

3. Oszillationsantriebsvorrichtung nach Anspruch 2, **dadurch gekennzeichnet, dass** der zumindest eine Bewegungswandler (32a; 32b; 32c; 32d; 32e; 32f; 32g) zumindest ein erstes Verbindungselement (34a; 34b; 34c; 34d, 34d'; 34e, 34e'; 34f; 34g) aufweist, das an dem ersten Exzenterelement (20a; 20b; 20c; 20d; 20e; 20f; 20g) anliegt, und zumindest ein zweites Verbindungselement (36a; 36b; 36c; 36d, 36d'; 36e, 36e'; 36f; 36g) aufweist, das an dem zweiten Exzenterelement (22a; 22b; 22c; 22d; 22e; 22f; 22g) anliegt.

4. Oszillationsantriebsvorrichtung nach einem der vorhergehenden Ansprüche, **dadurch gekennzeichnet, dass** die Ausgangswelle (16a) auf einer der Eingangswelle (14a) zugewandten Seite fliegend gelagert ist.

5. Oszillationsantriebsvorrichtung nach einem der vorhergehenden Ansprüche, **dadurch gekennzeichnet, dass** die Ausgangswelle (16b) zumindest eine Ausnehmung (38b) aufweist, durch welche sich die Eingangswelle (14b) erstreckt.

6. Oszillationsantriebsvorrichtung zumindest nach Anspruch 2, **gekennzeichnet durch** zumindest ein Lagerelement (40c) zur Lagerung der Ausgangswelle (16c), welches zwischen einem Verbindungsbereich, von der Ausgangswelle (16c) und dem Bewegungswandler (32c), und der Eingangswelle (14c) angeordnet ist.

7. Oszillationsantriebsvorrichtung nach einem der vorhergehenden Ansprüche, **dadurch gekennzeichnet, dass** die Ausgangswelle (16d; 16e) aus zumindest zwei Teilwellen (42d, 44d; 42e, 44e) besteht, welche zueinander beabstandet angeordnet sind und sich die Eingangswelle (14d; 14e) durch eine Lücke (46d; 46e) zwischen der ersten Teilwelle (42d; 42e) und der zweiten Teilwelle (44d; 44e) erstreckt.

8. Oszillationsantriebsvorrichtung nach einem der vorhergehenden Ansprüche, insbesondere nach einem Oberbegriff des Anspruchs 1, **gekennzeichnet durch** eine Vibrationsausgleichseinheit (48f; 48g), die wenigstens eine Ausgleichsmasse (50f; 50g) aufweist, die zum Ausgleich einer Vibration in wenigstens einem Betriebszustand entgegen einer Bewegungsrichtung der Ausgangswelle (16f; 16g) angetrieben ist.

9. Oszillationsantriebsvorrichtung nach Anspruch 8, insbesondere nach einem Oberbegriff des Anspruchs 1, **dadurch gekennzeichnet, dass** die Getriebeeinheit (18f; 18g) zumindest ein weiteres Exzenterelement (52f; 52g, 54g) zu einem oszillierenden Antrieb der Ausgleichsmasse (50f; 50g) umfasst.

10. Oszillationsantriebsvorrichtung nach Anspruch 9, insbesondere nach einem Oberbegriff des Anspruchs 1, **dadurch gekennzeichnet, dass** das weitere Exzenterelement (52f), das zu einem oszillierenden Antrieb der Ausgleichsmasse (50f) vorgesehen ist, einen maximalen Rotationsradius (r₁) aufweist, der größer ist, als ein maximaler Rotationsradius (r₂) der Exzenterelemente (20f, 22f), die zu einem oszillierenden Antrieb der Ausgangswelle (16f) vorgesehen sind.

11. Handwerkzeugmaschine, insbesondere Handwerkzeugmaschine (12a; 12b; 12c; 12d; 12e; 12f; 12g) mit einer oszillierend antreibbaren Spindel (56a; 56b; 56c; 56d; 56e; 56f; 56g), mit zumindest einer Oszillationsantriebsvorrichtung (10a; 10b; 10c; 10d; 10e; 10f; 10g) nach einem der vorhergehenden Ansprüche.

## Claims

1. Oscillatory driving device for a hand-held power tool (12a; 12b; 12c; 12d; 12e; 12f; 12g) having at least one input shaft (14a; 14b; 14c; 14d; 14e; 14f; 14g), having at least one output shaft (16a; 16b; 16c; 16d; 16e; 16f; 16g), and having at least one gearbox unit (18a; 18b; 18c; 18d; 18e; 18f; 18g), operatively connecting the input shaft (14a; 14b; 14c; 14d; 14e; 14f; 14g) to the output shaft (16a; 16b; 16c; 16d; 16e; 16f; 16g), which comprises at least one eccentric element (20a; 20b; 20c; 20d; 20e; 20f; 20g) for driving the output shaft (16a; 16b; 16c; 16d; 16e; 16f; 16g) in an oscillatory manner, wherein the gearbox unit (18a; 18b; 18c; 18d; 18e; 18f; 18g) comprises at least one further eccentric element (22a; 22b; 22c; 22d; 22e; 22f; 22g) for driving the output shaft (16a; 16b; 16c; 16d; 16e; 16f; 16g) in an oscillatory manner, **characterized in that** the eccentric elements (20a, 22a; 20b, 22b; 20c, 22c; 20d, 22d; 20e, 22e; 20f, 22f; 20g, 22g) are disposed on opposite sides of an imaginary plane (24a; 24b; 24c; 24d; 24e; 24f; 24g) in which a rotation axis (26a; 26b; 26c; 26d; 26e; 26f; 26g) of the output shaft (16a; 16b; 16c; 16d; 16e; 16f; 16g) lies, and which together with a rotation axis (28a; 28b; 28c; 28d; 28e; 28f; 28g) of the input shaft (14a; 14b; 14c; 14d; 14e; 14f; 14g) encloses a minimum angle of at least 70°, wherein a first of the eccentric elements (20a; 20b; 20c; 20d; 20e; 20f; 20g) is disposed on the input shaft (14a; 14b; 14c; 14d; 14e; 14f; 14g) along the rotation axis (28a; 28b; 28c; 28d; 28e; 28f; 28g) of the input shaft (14a; 14b; 14c; 14d; 14e; 14f; 14g), so as to be ahead of an intersection point (30a; 30b; 30c; 30d; 30e; 30f; 30g) of the rotation axes (26a, 28a; 26b, 28b; 26c, 28c; 26d, 28d; 26e, 28e; 26f, 28f; 26g, 28g) of the input shaft (14a; 14b; 14c; 14d; 14e; 14f; 14g) and of the output shaft (16a; 16b; 16c; 16d; 16e; 16f; 16g), and a second of the eccentric elements (22a; 22b; 22c; 22d; 22e; 22f; 22g) is disposed on the input shaft (14a; 14b; 14c; 14d; 14e; 14f; 14g) along the rotation axis (28a; 28b; 28c; 28d; 28e; 28f; 28g) of the input shaft (14a; 14b; 14c; 14d; 14e; 14f; 14g), so as to be behind an intersection point (30a; 30b; 30c; 30d; 30e; 30f; 30g) of the rotation axes (26a, 28a; 26b, 28b; 26c, 28c; 26d, 28d; 26e, 28e; 26f, 28f; 26g, 28g) of the input shaft (14a; 14b; 14c; 14d; 14e; 14f; 14g) and of the output shaft (16a; 16b; 16c; 16d; 16e; 16f; 16g).

2. Oscillatory driving device according to one of the preceding claims, **characterized in that** the gearbox unit (18a; 18b; 18c; 18d; 18e; 18f; 18g) has at least one motion converter (32a; 32b; 32c; 32d; 32e; 32f; 32g) by way of which the eccentric elements (20a, 22a; 20b, 22b; 20c, 22c; 20d, 22d; 20e, 22e; 20f, 22f; 20g, 22g) are operatively connected to the output shaft (16a; 16b; 16c; 16d; 16e; 16f; 16g).

3. Oscillatory driving device according to Claim 2, **characterized in that** the at least one motion converter (32a; 32b; 32c; 32d; 32e; 32f; 32g) has at least a first connection element (34a; 34b; 34c; 34d; 34d'; 34e; 34e'; 34f; 34g) that bears on the first eccentric element (20a; 20b; 20c; 20d; 20e; 20f; 20g), and at least one second connection element (36a; 36b; 36c; 36d; 36d'; 36e; 36e'; 36f; 36g) that bears on the second eccentric element (22a; 22b; 22c; 22d; 22e; 22f; 22g).

4. Oscillatory driving device according to one of the preceding claims, **characterized in that** the output shaft (16a) on a side that faces the input shaft (14a) is mounted in a floating manner.

5. Oscillatory driving device according to one of the preceding claims, **characterized in that** the output shaft (16b) has at least one clearance (38b) through which the input shaft (14b) extends.

6. Oscillatory driving device at least according to Claim 2, **characterized by** at least one bearing element (40c), which is disposed between a region connecting the output shaft (16c) and the motion converter (32c), and the input shaft (14c), for mounting the output shaft (16c).

7. Oscillatory driving device according to one of the preceding claims, **characterized in that** the output shaft (16d; 16e) is composed of at least two part-shafts (42d, 44d; 42e, 44e) which are disposed so as to be mutually spaced apart, and the input shaft (14d; 14e) extends through a gap (46d; 46e) between the first part-shaft (42d; 42e) and the second part-shaft (44d; 44e).

8. Oscillatory driving device according to one of the preceding claims, in particular according to a preamble of Claim 1, **characterized by** a vibration balancing unit (48f; 48g) which has at least one balancing mass (50f; 50g) which for balancing a vibration in at least one operating state is driven counter to a movement direction of the output shaft (16f; 16g).

9. Oscillatory driving device according to Claim 8, in particular according to a preamble of Claim 1, **characterized in that** the gearbox unit (18f; 18g) comprises at least one further eccentric element (52f; 52g, 54g) driving the balancing mass (50f; 50g) in an oscillatory manner.

10. Oscillatory driving device according to Claim 9, in particular according to a preamble of Claim 1, **characterized in that** the further eccentric element (52f) that is provided for driving the balancing mass (50f) in an oscillatory manner has a maximum rotation radius (r₁) which is larger than a maximum rotation radius (r₂) of the eccentric elements (20f, 22f) that are provided for driving the output shaft (16f) in an oscillatory manner.

11. Hand-held power tool, in particular a hand-held power tool (12a; 12b; 12c; 12d; 12e; 12f; 12g) having a spindle (56a; 56b; 56c; 56d; 56e; 56f; 56g) which is drivable in an oscillatory manner, having at least one oscillatory driving device (10a; 10b; 10c; 10d; 10e; 10f; 10g) according to one of the preceding claims.

## Revendications

1. Dispositif d'entraînement en oscillation pour une machine-outil portative (12a ; 12b ; 12c ; 12d ; 12e ; 12f ; 12g), comportant au moins un arbre d'entrée (14a ; 14b ; 14c ; 14d ; 14e ; 14f ; 14g), comportant au moins un arbre de sortie (16a ; 16b ; 16c ; 16d ; 16e ; 16f ; 16g) et comportant au moins une unité de transmission (18a ; 18b ; 18c ; 18d ; 18e ; 18f ; 18g) reliant fonctionnellement l'arbre d'entrée (14a ; 14b ; 14c ; 14d ; 14e ; 14f ; 14g) à l'arbre de sortie (16a ; 16b ; 16c ; 16d ; 16e ; 16f ; 16g), laquelle unité de transmission comporte au moins un élément excentrique (20a ; 20b ; 20c ; 20d ; 20e ; 20f ; 20g) pour un entraînement de manière oscillante de l'arbre de sortie (16a ; 16b ; 16c ; 16d ; 16e ; 16f ; 16g), l'unité de transmission (18a ; 18b ; 18c ; 18d ; 18e ; 18f ; 18g) comportant au moins un autre élément excentrique (22a ; 22b ; 22c ; 22d ; 22e ; 22f ; 22g) pour un entraînement de manière oscillante de l'arbre de sortie (16a ; 16b ; 16c ; 16d ; 16e ; 16f ; 16g), **caractérisé en ce que** les éléments excentriques (20a, 22a ; 20b, 22b ; 20c, 22c ; 20d, 22d ; 20e, 22e ; 20f, 22f ; 20g, 22g) sont disposés sur des côtés opposés d'un plan imaginaire (24a ; 24b ; 24c ; 24d ; 24e ; 24f ; 24g) dans lequel un axe de rotation (26a ; 26b ; 26c ; 26d ; 26e ; 26f ; 26g) de l'arbre de sortie (16a ; 16b ; 16c ; 16d ; 16e ; 16f ; 16g) est situé et qui forme avec un axe de rotation (28a ; 28b ; 28c ; 28d ; 28e ; 28f ; 28g) de l'arbre d'entrée (14a ; 14b ; 14c ; 14d ; 14e ; 14f ; 14g) un angle le plus petit d'au moins 70°, un premier élément parmi les éléments excentriques (20a ; 20b ; 20c ; 20d ; 20e ; 20f ; 20g) étant disposé sur l'arbre d'entrée (14a ; 14b ; 14c ; 14d ; 14e ; 14f ; 14g) devant un point d'intersection (30a ; 30b ; 30c ; 30d ; 30e ; 30f ; 30g) des axes de rotation (26a, 28a ; 26b, 28b ; 26c, 28c ; 26d, 28d ; 26e, 28e ; 26f, 28f ; 26g, 28g) de l'arbre d'entrée (14a ; 14b ; 14c ; 14d ; 14e ; 14f ; 14g) et de l'arbre de sortie (16a ; 16b ; 16c ; 16d ; 16e ; 16f ; 16g) le long de l'axe de rotation (28a ; 28b ; 28c ; 28d ; 28e ; 28f ; 28g) de l'arbre d'entrée (14a ; 14b ; 14c ; 14d ; 14e ; 14f ; 14g) et un deuxième élément parmi les éléments excentriques (22a ; 22b ; 22c ; 22d ; 22e ; 22f ; 22g) étant disposé sur l'arbre d'entrée (14a ; 14b ; 14c ; 14d ; 14e ; 14f ; 14g) derrière ce point d'intersection le long de l'axe de rotation (28a ; 28b ; 28c ; 28d ; 28e ; 28f ; 28g) de l'arbre d'entrée (14a ; 14b ; 14c ; 14d ; 14e ; 14f ; 14g).

2. Dispositif d'entraînement en oscillation selon l'une des revendications précédentes, **caractérisé en ce que** l'unité de transmission (18a ; 18b ; 18c ; 18d ; 18e ; 18f ; 18g) comprend au moins un convertisseur de mouvement (32a ; 32b ; 32c ; 32d ; 32e ; 32f ; 32g) par le biais duquel les éléments excentriques (20a, 22a ; 20b, 22b ; 20c, 22c ; 20d, 22d ; 20e, 22e ; 20f, 22f ; 20g, 22g) sont reliés fonctionnellement à l'arbre de sortie (16a ; 16b ; 16c ; 16d ; 16e ; 16f ; 16g).

3. Dispositif d'entraînement en oscillation selon la revendication 2, **caractérisé en ce que** l'au moins un convertisseur de mouvement (32a ; 32b ; 32c ; 32d ; 32e ; 32f ; 32g) comprend au moins un premier élément de liaison (34a ; 34b ; 34c ; 34d, 34d' ; 34e, 34e' ; 34f ; 34g) qui s'appuie contre le premier élément excentrique (20a ; 20b ; 20c ; 20d ; 20e ; 20f ; 20g) et au moins un deuxième élément de liaison (36a ; 36b ; 36c ; 36d, 36d' ; 36e, 36e' ; 36f ; 36g) qui s'appuie contre le deuxième élément excentrique (22a ; 22b ; 22c ; 22d ; 22e ; 22f ; 22g).

4. Dispositif d'entraînement en oscillation selon l'une des revendications précédentes, **caractérisé en ce que** l'arbre de sortie (16a) est monté en porte-à-faux sur un côté tourné vers l'arbre d'entrée (14a).

5. Dispositif d'entraînement en oscillation selon l'une des revendications précédentes, **caractérisé en ce que** l'arbre de sortie (16b) comprend au moins un évidement (38b) à travers lequel s'étend l'arbre d'entrée (14b) .

6. Dispositif d'entraînement en oscillation au moins selon la revendication 2, **caractérisé par** au moins un élément de palier (40c) pour le montage de l'arbre de sortie (16c), lequel élément de palier est disposé entre une zone de liaison, de l'arbre de sortie (16c) et du convertisseur de mouvement (32c), et l'arbre d'entrée (14c) .

7. Dispositif d'entraînement en oscillation selon l'une des revendications précédentes, **caractérisé en ce que** l'arbre de sortie (16d ; 16e) est constitué d'au moins deux parties d'arbre (42d, 44d ; 42e, 44e), lesquelles sont disposées de manière espacée les unes des autres, et l'arbre d'entrée (14d ; 14e) s'étend à travers un espace (46d ; 46e) entre la première partie d'arbre (42d ; 42e) et la deuxième partie d'arbre (44d ; 44e).

8. Dispositif d'entraînement en oscillation selon l'une des revendications précédentes, en particulier selon un préambule de la revendication 1, **caractérisé par** une unité de compensation de vibration (48f ; 48g), qui comprend au moins une masse de compensation (50f ; 50g) qui, pour la compensation d'une vibration, est entraînée en sens inverse d'un sens de mouvement de l'arbre de sortie (16f ; 16g) dans au moins un état de fonctionnement.

9. Dispositif d'entraînement en oscillation selon la revendication 8, en particulier selon un préambule de la revendication 1, **caractérisé en ce que** l'unité de transmission (18f ; 18g) comporte au moins un autre élément excentrique (52f ; 52g, 54g) pour un entraînement de manière oscillante de la masse de compensation (50f ; 50g) .

10. Dispositif d'entraînement en oscillation selon la revendication 9, en particulier selon un préambule de la revendication 1, **caractérisé en ce que** l'autre élément excentrique (52f), qui est prévu pour un entraînement de manière oscillante de la masse compensation (50f), présente un rayon de rotation maximal (r₁) qui est supérieur à un rayon de rotation maximal (r₂) des éléments excentriques (20f, 22f) qui sont prévus pour un entraînement de manière oscillante de l'arbre de sortie (16f) .

11. Machine-outil portative, en particulier machine-outil portative (12a ; 12b ; 12c ; 12d ; 12e ; 12f ; 12g) comportant une broche (56a ; 56b ; 56c ; 56d ; 56e ; 56f ; 56g) pouvant être entraînée de manière oscillante, comportant au moins un dispositif d'entraînement en oscillation (10a ; 10b ; 10c ; 10d ; 10e ; 10f ; 10g) selon l'une des revendications précédentes.
